# EUROPEAN PATENT SPECIFICATION

(11) **EP 1 319 258 B1**
(45) Date of publication and mention of the grant of the patent: **26.10.2005**
(21) Application number: 01922342.9
(22) Date of filing: 13.03.2001
(51) Int. Cl.: H01M 2/00

(54) **CONTINUITY TESTING IN COMMUNICATION NETWORKS**
KONTINUITÄTSPRÜFUNG IN KOMMUNIKATIONSNETZEN
ESSAI DE CONTINUITE DANS DES RESEAUX DE COMMUNICATION

(30) Priority: 13.03.2000 US 523813; 28.03.2000 US 537054; 28.03.2000 US 537057
(43) Date of publication of application: 18.06.2003
(73) Proprietor: SPRINT COMMUNICATIONS COMPANY, L.P., Kansas City, MO 64114-0417 (US)
(72) Inventor: QIU, Chaoxin, Charles, Olathe, KS 66061 (US); SILVUS, Shannon, P., Penfield, NY 14526 (US); KENNEDY, Richard, N., Naperville, IL 60540 (US); GETTLES, Michael, J., Olathe, KS 66061-6490 (US); DOUSKALIS, William, Centreville, VA 20121 (US)
(74) Representative: Bibby, William Mark
(86) International application number: PCT/US2001/007854
(87) International publication number: WO 2001/069697

(56) References cited:
- WO-A-98/23053
- WO-A-99/28827
- US-A- 5 438 570
- BANDOW G ET AL: "Die Continuity Check-Prozedur" ZEICHENGABESYSTEME, LTU VERTRIEBSGESELLSCHAFT MBH, 1995, pages 149-150, XP002214715 BREMEN(DE)

## Description

### RELATED APPLICATIONS

This application claims priority to prior nonprovisional U.S. applications 09/523,813, 09/537,054, and 09/537,057, which are incorporated herein by reference.

### FEDERALLY SPONSORED RESEARCH OR DEVELOPMENT

Not applicable

### MICROFICHE APPENDIX

Not applicable

### BACKGROUND OF THE INVENTION

### 1. FIELD OF THE INVENTION

The invention relates to communication networks, and specifically, to a method and system for providing continuity testing in communication networks.

### 2. DESCRIPTION OF THE PRIOR ART

The development of advanced communication networks has taken on critical importance with the dramatic rise in consumer demand for higher quality services. Continuity testing in communication networks is one method of ensuring the quality of services. A continuity test ensures bearer channel connectivity prior to call completion. The continuity test is generally performed on a pre-determined percentage of calls to verify bearer channel connectivity between a pair of switches.

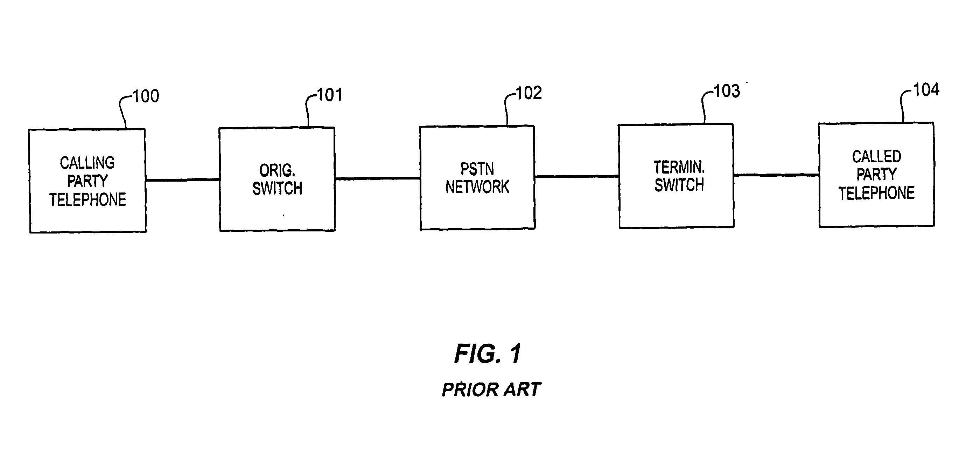

FIG. 1 illustrates a block diagram that illustrates a public switched telephone network (PSTN) using signaling system 7 (SS7) that performs a continuity test. On FIG. 1 the calling party removes the receiver from the calling party's telephone 100. The originating switch 101 detects the off-hook and provides a dial tone to telephone 100. Responsive to receiving the dial tone, the user enters the digits for a call destination. The originating switch 101 processes the entered digits and provides an initial address message (IAM) to the network 102. The IAM message includes a continuity test flag that indicates to the network 102 that a continuity test will be performed on the bearer channel between the network 102 and the originating switch 101. The originating switch 101 then sends a test tone over the bearer channel to the network 102. Responsive to sending the test tone, the originating switch 101 starts a timer. The network 102 loops the test tone back to the originating switch 101. If the test tone is received back in the originating switch 101 before the timer times-out, the continuity test is successful and the originating switch 101 sends a continuity test message to the network 102. The continuity message confirms the continuity test is complete and successful. If the test tone is not received back in the originating switch 101 before the timer times-out, the continuity test is failed and the call is cleared. Responsive to a successful continuity test, the network 102 provides an IAM message to the terminating switch 103 and reserves a call connection between the originating switch 101 and the terminating switch 103. The terminating switch 103 sends an address complete message (ACM) to the network 102 and the call is completed between telephones 100 and 104 in the conventional fashion.

Unfortunately, packet-networks do not effectively support continuity testing. These networks typically require installation of communication hubs in the customer premises. The communication hubs are controlled by an out-of-band call agent that does not have knowledge of bearer path connectivity when call setup messages are received from the communication hubs.

Call tones are generated in communication networks to provide callers with feedback regarding the status of calls and call connections. Examples of specific call tones include a ringback tone, a busy signal tone, and a reorder tone. The reorder tone is sometimes referred to as a fast busy signal in the art. Typically, call tones are provided in communication networks by a terminating communication device upon completion of the call connection. In some applications however, call tones can be provided by an originating communication device by triggering the call tone generation using a control or signaling channel.

The network in FIG. 1 also illustrates an example of call tone control and generation for a call session in the PSTN. On FIG. 1, the calling party removes the receiver from the calling party's telephone 100. The originating switch 101 detects the off-hook and provides a dial tone to the calling party's telephone 100. Responsive to receiving the dial tone, the user enters the digits for a call destination. The originating switch 101 processes the entered digits and provides a call setup message to the network 102. The network 102 provides the call setup message to the terminating switch 103 arid reserves a connection between the originating switch 101 and the terminating switch 103. In response to receiving the call setup message, the terminating switch 103 provides an acknowledgment message to the network 102. If the terminating switch 103 detects the called party's telephone 104 is off-hook or busy, the terminating switch 103 provides busy signal tones over the network 102 to the calling party's telephone 100. If the terminating switch 103 does not detect that the called party's telephone 104 is off-hook or busy, the terminating switch 103 provides ringback tones over the network 102 to the calling party's telephone 100. The terminating switch 103 also rings the called party's telephone 104 to announce the incoming call.

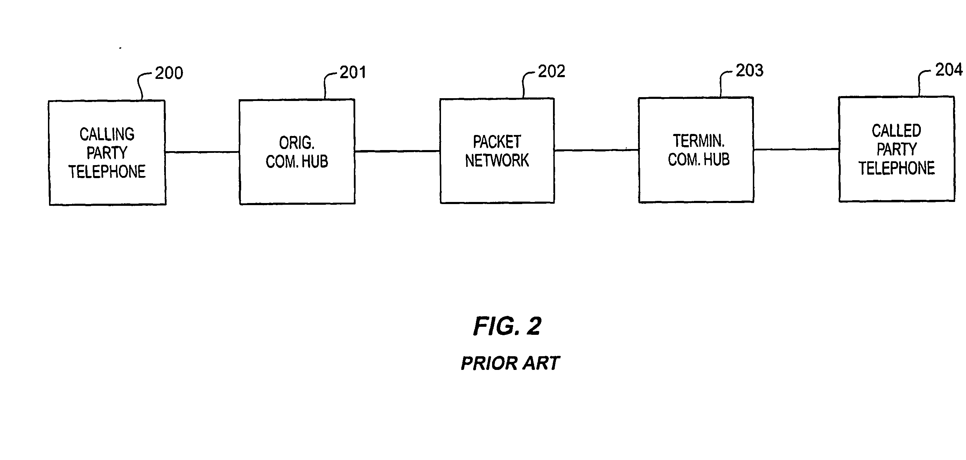

FIG. 2 illustrates another example of call tone generation and control for a call session in a packet communication network. On FIG. 2 the calling party removes the receiver from the calling party's telephone 200. The originating communication hub 201 detects the off-hook event and provides an off-hook message to the network 202. Responsive to receiving the off-hook message, the network 202 provides a dial tone to the calling party's telephone 200 via the originating communication hub 201. Responsive to receiving the dial tone the user enters the digits for the call destination. The originating communication hub 201 detects the digits and provides the digits to the network 202. The network 202 processes the digits and generates a setup message for a terminating communication hub 203 connected to the called party's telephone 204. Responsive to receiving the setup message, the terminating communication hub 203 provides a setup neknowledgment message to the network 202. If the called party's telephone 204 is off-hook or busy, the terminating communication hub 203 provides busy signal tones over the network 202 and communication hub 201 to the calling party's telephone 200. If the terminating communication hub 203 does not detect the called party's telephone 203 is off-hook or busy, the terminating communication hub 203 provides ringback tones over the network 202 and communication hub 201 to the calling party's telephone 200. The terminating communication hub 203 also rings the called party's telephone 204 to announce the incoming call.

The following references further illustrate continuity testing in the prior art. U.S. Patent No. 5,438,570 describes service observing equipment that monitors, detects and makes call records from digital and audio information on an individual call basis. The observation equipment can monitor both a Signaling System Seven (SS #7) and a CCITT #7 in which data packets are transmitted along the high speed data links separated from the telecommunication audio channels. The call record indicates how trouble free and efficiently (or how troubled and inefficiently) individual calls are processed by the telecommunication network. A plurality of separate memory locations are assigned on an individual call basis, for the duration of a given call, to store data received over any of many data links and communication channels relative to that given call. After the call has terminated, the accumulated data is analyzed to determine the call's final disposition. A call record is restored in memory for reports and/or transmitted to a printer or another processor. Then, the emplied memory locations are reassigned to accumulate data relative to new calls. In addition, the service observation equipment can trap annoyance calls and generate disposition reports on threshold levels of operation, provide live observing of calls in progress, generate real-time and/or long term peak and average link occupancy reports, and display a listing of time stamped messages for a specific call in order to provide for protocol analysis.

WO Publication 98/23053 describes a telecommunications signaling processor for processing Signaling System #7 (SS7) telecommunication signaling messages to select ATM virtual connections and provide control messages indicating a selected ATM virtual connections. The signaling processor comprises: a computer system, data structures, originating process logic, and terminating process logic. The data structure has trunk circuit table, trunk group table, exception table, ANI table, called number table, and a routing table. Originating process logic and terminating logic are stored in the computer system and process information from (SS7) signaling messages that relates to an originating circuit and terminating circuit and access the data structures to request a terminating ATM virtual connection in response to the request from the originating process.

WO Publication 99/28827 describes methods and systems for a distributed scalable hardware independent system that supports multiple functions regarding management and support of communications over a packet-based network. The communications supported by these methods and systems include Voice Over Internet Protocol ("VOIP"), voice over Asynchronous Transfer Mode ("ATM"), video conferencing, data transfer, telephony, and downloading video or other data. These methods and systems use a call agent, which is composed of various objects distributed along a CORBA software bus, for exercising call management over two endpoints communicating over a packet-based network.

It is a problem in communication networks to provide call tones over the network from the terminating device. Unfortunately, effective call tone generation is not supported because new services such as call waiting, call forwarding, and three-way-calling have increased network bandwidth demands. Therefore, a need exists in the art to free network resources and free bandwidth currently utilized by call tone generation and control in packet communication networks.

### SUMMARY OF THE INVENTION

The present invention advances the art by providing a communication system that performs continuity testing in a packet communication network. Advantageously, service assurance is provided before call completion and cady detection of network failures is realized. In another advance in the art, the invention provides a communication system that provides call tones in communication networks at points proximate a calling device. Some examples of call tones that could be provided include without limitation, ringback tones, busy signal tones, and reorder tones. The communication system combines call tone generation and control with continuity testing in the network and utilizes the call tone messaging to perform the continuity test. Thus, network resources required for call completion are reduced because call tones are provided at points proximate the calling device and a separate continuity test of the bearer channel is unnecessary.

According to one aspect of the invention there is provided a communication system configured to test for continuity on a channel of a packet communication network, the communication system comprising a first communication hub connected to the packet communication network and a second communication hub connected to the packet communication network, wherein the communication system is configured to connect a call between the first communication hub and the second communication hub over the packet communication network, wherein the packet communication network is configured to generate and transmit a continuity test instruction to the second communication hub, the communication system characterized by the second communication hub being configured to process the continuity test instruction and a network address of the first communication hub to generate a request for continuity acknowledgment message, and transmit the request for continuity acknowledgment message to the first communication hub over the channel of the packet communication network; the first communication hub being configured to receive the request for continuity acknowledgment message over the packet communication network, to process the request for continuity acknowledgment message and a network address of the second communication hub to generate a continuity acknowledgment message, and to transmit the continuity acknowledgment message to the second communication hub over the channel of the packet communication network; and the second communication hub being configured to process the continuity acknowledgment message to generate a continuity confirmation message identifying continuity on the channel of the packet communication network, transmit the continuity confirmation message to the packet communication network, process a continuity test tone instruction to generate continuity test tones and provide the continuity test tones over a bearer channel of a communication network that is connected to the second communication hub, and receive the continuity test tones over the bearer channel of the communication network and process the continuity test tones to provide a continuity test tone confirmation message to the packet communication network that includes a confirmation that the continuity test tones were received back from the communication network.

According to another aspect of the invention there is provided a method of operating a communication system to test continuity on a channel of a packet communication network, wherein the communication system comprises a first communication hub, a second communication hub, and the packet communication network, wherein the communication system is configured to connect a call between the first communication hub and the second communication hub over the packet communication network, wherein the packet communication network generates and transmits a continuity test instruction to the second communication hub, the method characterized by the steps of in the second communication hub, processing the continuity test instruction and a network address of the first communication hub to generate a request for continuity acknowledgment message and transmitting the request for continuity acknowledgment message to the first communication hub over the channel of the packet communication network; in the first communication hub, receiving the request for continuity acknowledgment message over the channel of the packet communication network, processing the request for continuity acknowledgment message and a network address of the second communication hub to generate a continuity acknowledgment message, and transmitting the continuity acknowledgement message to the second communication hub over the channel of the packet communication network; and in the second communication hub processing the continuity acknowledgment message to generate a continuity confirmation message identifying continuity of the channel of the packet communication network, and transmitting the continuity confirmation message to the packet communication network, processing a continuity test tone instruction to generate continuity test tones and providing the continuity test tones over a bearer channel of a communication network that is connected to the second communication hub, receiving the continuity test tones over the bearer channel of the communication network, processing the continuity test tones to generate a continuity test tone confirmation message that includes a confirmation that the continuity test tones were received back from the communication network, and transmitting the continuity test tone confirmation message to the packet communication network.

In an embodiment of the invention, the communication system includes a communication hub comprised of a processor and an interface. The processor is configured to process a continuity test instruction to generate a request for continuity acknowledgement message. The interface is configured to receive the continuity test instruction and transmit the request for continuity acknowledgement message. If a continuity acknowledgement message is received in the communication hub responsive to the request for continuity acknowledgement message, the continuity test is passed. If the continuity acknowledgement message is not receive in response to the request for continuity acknowledgement message, the continuity test is failed.

In another embodiment of the present invention, the communication hub is comprised of an interface coupled to a processor and a tone generator. The processor is configured to process a continuity test instruction to generate a request for continuity acknowledgement message. In some example of the invention, the processor is also configured to process a continuity test tone instruction to direct the tone generator to provide continuity test tones to another communication network. The tone generator is configured to generate the continuity test tones under control of the processor. The interface is configured to receive the continuity test instruction and the continuity test tone instruction and transmit the request for continuity acknowledgment message and the continuity test tones for the processor.

In another embodiment of the invention, the communication hub is comprised of a processor, an interface, and a tone generator. The tone generator is configured to generate the call tones under control of the processor. The processor is configured to process an in-band call tone request message that includes a request to provide call tones to a call device connected to the communication hub. The processor is further configured to generate a continuity acknowledgment message in response to the call tone request message and direct the tone generator to provide call tones to the call device. The interface is configured to receive the call tone request message and transmit the continuity acknowledgment message and the call tones.

In another embodiment of the invention, the communication hub is comprised of an interface coupled to a processor and a tone generator. The tone generator is configured to generate the call tones under control of the processor. The processor is configured to process an in-band call tone request message to direct the tone generator to provide the call tones to a call device. The interface is configured to receive the call tone request message and transmit the call tones to the call device.

In the context of the present invention the first, second, third, fourth, etc. connotations used to reference the messages, the calls, and the devices are used for the purpose of differentiating between different messages, different calls, and different devices and are not used to indicate a message sequence, call sequence or processing sequence. Also in the context of the present invention, an on-network call session is defined as a call session between two devices connected to the same communication network. An off-network to on-network call session and an on-network to off-network call session are defined as an incoming call session or an outgoing call session, respectively, between two devices connected to different communication networks. For example, an incoming call session or an outgoing call session between a call device connected to a packet network and a call device connected to the PSTN. In-band is defined as using the bearer portion of a communication path, for example, over the bearer channel in an asynchronous transfer mode (ATM) connection. Those skilled in the art will appreciate that in some environments, such as an Internet Protocol (IP) environment, in-band could simply be a pair of addresses, such as the address of the originating device and the address of the terminating device.

### BRIEF DESCRIPTION OF THE DRAWINGS

FIG. 1 illustrates an example of a prior art communication network;
FIG. 2 illustrates another example of a prior art communication network;
FIG. 3 illustrates an example of a network architecture according to the present invention;
FIG. 4 illustrates an example of a communication hub according to the present invention;
FIG. 5 illustrates another example of a communication hub according to the present invention;
FIGS. 6 and 7 illustrate a message sequence chart for an example of an on-network to off-network call session according to the present invention;
FIG. 8 illustrates a message sequence chart for an example of a failed on-network to off-network call session according to the present invention;
FIGS. 9 and 10 illustrate a message sequence chart for another example of an on-network to off-network call session according to the present invention;
FIG. 11 illustrates a message sequence chart for an example of an on-network call session according to the present invention;
FIG. 12 illustrates a message sequence chart for an example of an off-network to on-network call session according to the present invention;
FIG. 13 illustrates an example of a communication system according to the present invention;
FIG. 14 illustrates an example of a communication hub according to the present invention;
FIGS. 15 and 16 illustrate a message sequence chart for an example of an on-network call session according to the present invention;
FIGS. 17 and 18 illustrate a message sequence chart for an example of an on-network to off-network call session according to the present invention;
FIGS. 19 and 20 illustrate a message sequence chart for an example of an off-network to on-network call session according to the present invention;
FIGS. 21 and 22 illustrate a message sequence chart for another example of an on-network to off-network call session according to the present invention;
FIG. 23 illustrates an example of a communication system according to the present invention;
FIG. 24 illustrates an example of a communication hub according to the present invention;
FIG. 25 illustrates a message sequence chart for an example of an on-network call session according to the present invention;
FIG. 26 illustrates a message sequence chart for an example of an on-network call session according to the present invention where the called device is busy;
FIGS. 27 and 28 illustrate a message sequence chart for an example of an off-network to on-network call session according to the present invention; and
FIG. 29 illustrates a message sequence chart for an example of an off-network to on-network call session according to the present invention where the called device is busy.

### DETAILED DESCRIPTION OF THE INVENTION

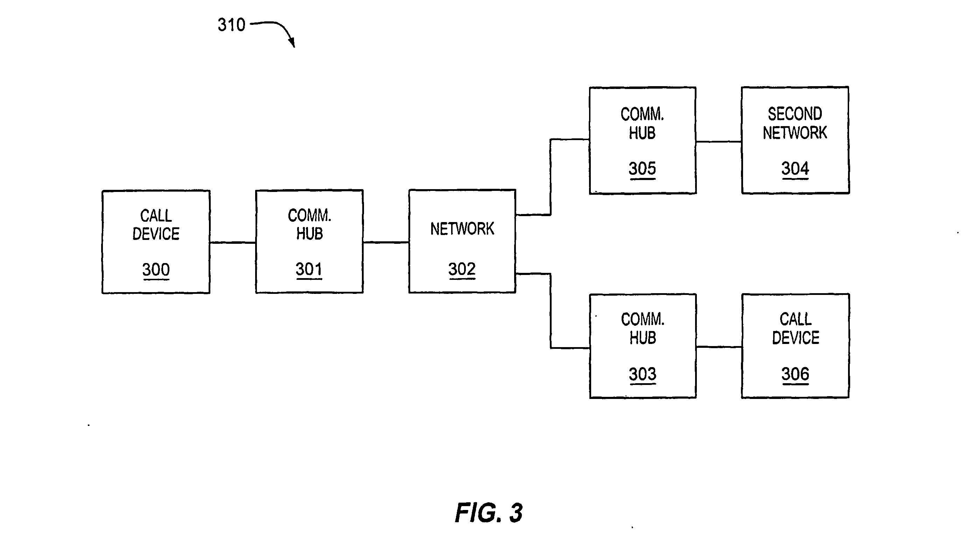

### A Communication System - FIG. 3

FIG. 3 illustrates a communication system 310 according to the present invention. FIG. 3 depicts call devices 300 and 306, communication hubs 301, 303, and 305, communication network 302 and second communication network 304. Communication hub 301 is connected to call device 300 and communication network 302. Communication network 302 is connected to communication hubs 303 and 305. Communication hub 303 is connected to call device 306 and second communication network 304 is connected to communication hub 305.

Call devices 300 and 306 could be conventional call devices that use digital and analog telephony format. Some examples of call devices 300, 306, and 307 are devices configured to provide voice, data, and video communications. Communication network 302 and second communication network 304 could be different communication networks. In some examples of the present invention, communication network 302 is a packet network and second communication network 304 could be any other network including without limitation, a wireless network, a packet network, an internet, or the PSTN. Those skilled in the art will appreciate the communication networks 302 and 304 would include various conventional components not shown on FIG. 3 for clarity.

Communication hub 301 could be any communication device capable of receiving a continuity test instruction and process the continuity test instruction to provide a request for continuity acknowledgment message. Communication hub 303 could be any communication device capable of receiving and processing the request for continuity acknowledgment message to generate and transmit a continuity acknowledgment message. If communication hub 301 receives the continuity acknowledgment message responsive to its request, the continuity test is successful. If communication hub 301 does not receive the continuity acknowledgment message responsive to its request, the continuity test is failed. Some examples of communication hub 301 include without limitation, a residential communication hub, a private branch exchange (PBX), and a switch.

Communication hub 303 could also incorporate the features of communication hub 301 to receive a continuity test instruction and process the continuity test instruction to provide a request for continuity acknowledgment message. Similarly, communication hub 301 could incorporate the features of communication hub 303 to receive and process the request for continuity acknowledgment message to generate and transmit a continuity acknowledgment message.

Communication hub 305 could be any communication device capable of interfacing between communication network 302 and second communication network 304. Communication hub 305 could incorporate the features of communication hubs 301 and 303 to perform continuity testing in communication network 302. Communication hub 305 could also be configured to receive a continuity test tones instruction and process the continuity test tones instruction to provide continuity test tones to second communication network 304. If communication hub 305 receives an acknowledgment responsive to providing the continuity test tones, the continuity test is successful. In some examples of the present invention, the acknowledgment could be receipt of the continuity test tones through a conventional loopback method in second communication network 304. If communication hub 305 does not receive the acknowledgment responsive to providing the continuity test tones, the continuity test is failed. Some examples of communication hub 305 include without limitation, a network device such as a voice gateway, a PBX, and a switch.

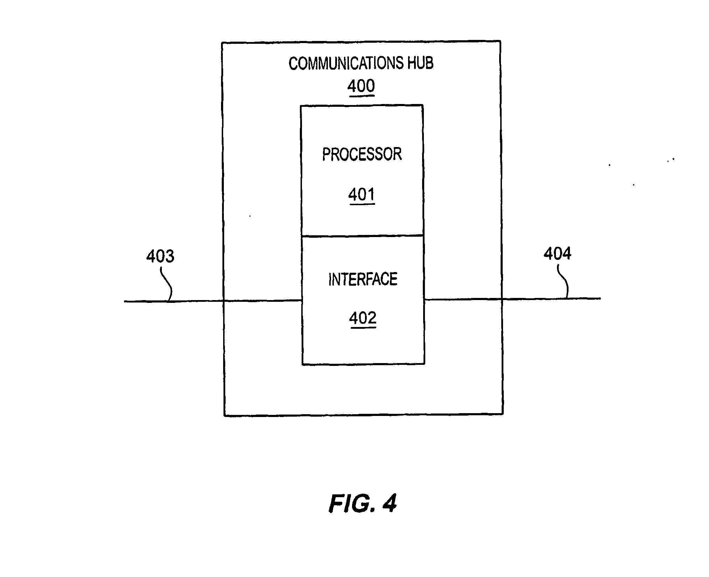

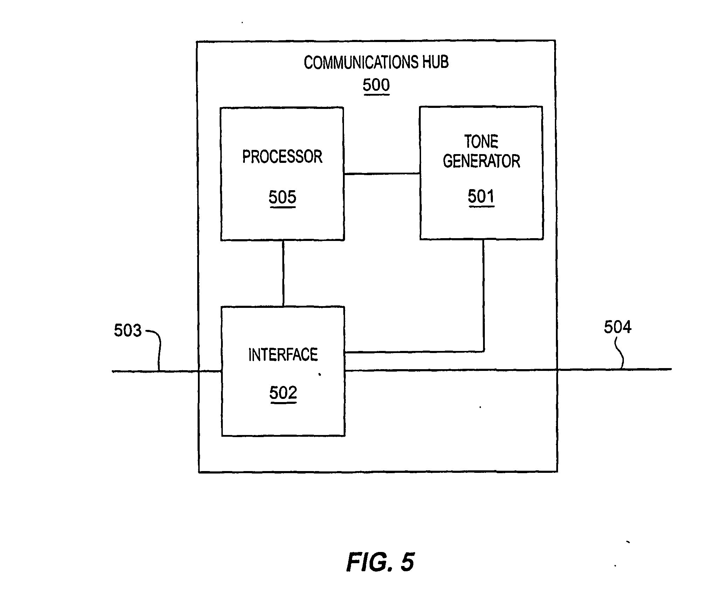

### The Communication Hub - FIGS. 4 and 5

FIG. 4 depicts an example of communication hubs 301, 303, and 305 according to the present invention, namely communication hub 400. Those skilled in the art will appreciate numerous variations that do not depart from the present invention. Those skilled in the art will also appreciate that various features described below could be combined with the above described embodiment to form multiple variations of the invention.

Communication hub 400 comprises processor 401 coupled to interface 402. Interface 402 is connected to communication paths 403 and 404. Communication paths 403 and 404 could be conventional communication paths. Those skilled in the art will appreciate that in some embodiments of the invention interface 402 could be a part of processor 401, such as where interface 402 is in the same processing circuitry or included on the same chip as processor 401. Those skilled in the art will also understand that communication hub 400 would include other conventional components not shown on FIG. 3 for clarity, depending on the type of device and its operation in a network environment.

Processor 401 could be any processor capable of processing various messages to conduct continuity testing of a bearer channel. For example, processor 401 could process a continuity test instruction to generate a request for continuity acknowledgment message for another communication device. If processor 401 receives the continuity acknowledgment message from the another communication device the continuity test is successful. If processor 401 does not receive the continuity acknowledgment message from the another communication device the continuity test is failed. Processor 401 could also receive and process a request for continuity acknowledgment message from another communication device to generate a continuity acknowledgment message for the another communication device. Advantageously, the request for continuity acknowledgment message and the continuity acknowledgment message are provided over the bearer channel, thus ensuring bearer channel connectivity prior to call completion.

Interface 402 could be any interface that receives messages for processor 401 and transmits messages for processor 401. Interface 402 could also be a voice interface that acts as a POTS interface or packet interface, supervises messages, channels voice communications, or resolves contention between voice lines or voice communication paths. Interface 402 could also be a data or video interface that manages data stream, video stream, performs asynchronous time division, or concentrates data and video lines or paths. One example of interface 402 includes without limitation an asynchronous transfer mode (ATM) interface capable of handling ATM messaging for processor 401 over communication path 404 and capable of handling analog signaling for processor 401 over communication path 403. Interface 402 could handle numerous such communication paths although only communication paths 403 and 404 are shown for clarity.

FIG. 5 depicts another example of communication hubs 301, 303, and 305 according to the present invention, namely communication hub 500. Those skilled in the art will appreciate numerous variations that do not depart from the present invention. Those skilled in the art will also appreciate that various features described below could be combined with the above described embodiment to form multiple variations of the invention.

Communication hub 500 is comprised of a processor 505, a tone generator 501, and an interface 502. Interface 502 is connected to processor 505, tone generator 501, and communication paths 503 and 504. Communication paths 503 and 504 could be conventional communication paths. Processor 505 is also connected to tone generator 501. Those skilled in the art will appreciate that in some embodiments of the invention tone generator 501 and interface 502 could be a part of processor 505, such as where tone generator 501 and interface 502 are in the same processing circuitry or included on the same chip as processor 505. Those skilled in the art will also understand that communication hub 500 would include other conventional components not shown on FIG. 5 for clarity, depending on the type of device and its operation in a network environment.

Processor 505 could be any processor capable of processing various messages to conduct continuity testing of a bearer channel. For example, processor 505 could process a continuity test instruction to generate a request for continuity acknowledgment message for another communication device. If processor 505 receives the continuity acknowledgment message from the another communication device the continuity test is successful. If processor 505 does not receive the continuity acknowledgment message from the another communication device the continuity test is failed. Processor 505 could also receive and process a request for continuity acknowledgment message from another communication device to generate and transmit a continuity acknowledgment message for the another communication device. Advantageously, the request for continuity acknowledgment message and the continuity acknowledgment message are provided over the bearer channel, thus ensuring bearer channel connectivity prior to call completion.

In another example, processor 505 is also configured to process a continuity test tone instruction to direct tone generator 501 to provide continuity test tones to another communication network. If processor 505 receives an acknowledgment message from the another communication network the continuity test is successful. If processor 505 does not receive the acknowledgment message from the another communication network the continuity test is failed. Advantageously, bearer channel connectivity in the local communication network and other communication networks is confirmed prior to call completion.

Interface 502 could be any interface that receives messages for processor 505 and transmits messages for processor 505. Interface 502 could also be a voice interface that acts as a POTS interface or packet interface, supervises messages, channels voice communications, or resolves contention between voice lines or voice communication paths. Interface 502 could also be a data or video interface that manages data stream, video stream, performs asynchronous time division, or concentrates data and video lines or paths. One example of interface 502 includes without limitation an asynchronous transfer mode (ATM) interface capable of handling ATM messaging for processor 505 over communication path 504 and capable of handling analog signaling for processor 505 over communication path 503. Interface 502 could handle numerous such communication paths although only communication paths 503 and 504 are shown for clarity.

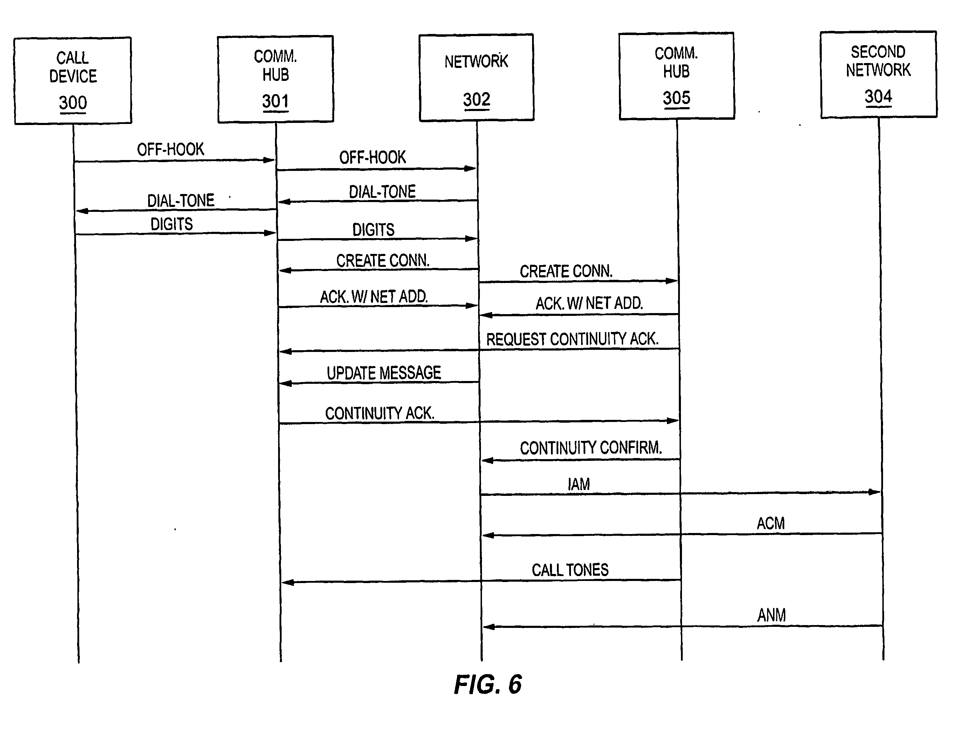

### Operation -- FIGS. 6-12

FIGS. 6-12 are message sequence charts illustrating various examples of the operation of a communication hub according to the present invention. It is anticipated, however, that various modifications to these examples will be readily apparent to those skilled in the art. The principles defined herein may also be applied to other embodiments without the use of inventive faculty. Thus, the present invention is not intended to be limited to the examples shown below but is to be accorded the widest scope consistent with the principles and novel features disclosed herein.

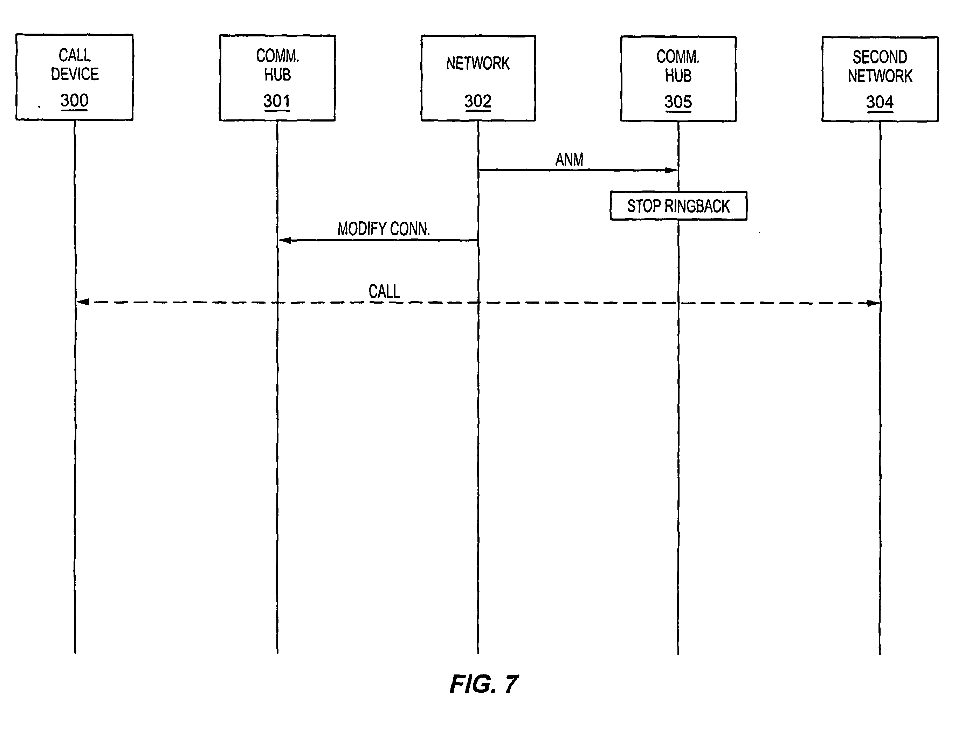

FIGS. 6 and 7 illustrate a message sequence chart illustrating an example according to the present invention of a successful continuity test between communication hubs 301 and 305. In this example the call session is an on-network to off-network call session between communication hubs 301 and 305. On FIGS. 6 and 7, call device 300 goes off-hook and an off-hook event is detected in communication hub 301. Communication hub 301 provides an off-hook message to communication network 302. Responsive to receiving the off-hook message, communication network 302 provides a dial tone to call device 300 via communication hub 301. Caller entered digits are transmitted from call device 300 to communication network 302 via communication hub 301. Responsive to receiving the digits, communication network 302 provides a create connection message to communication hub 301. The create connection message to communication hub 301 creates a half duplex bearer connection between communication network 302 and communication hub 301. Responsive to the connection setup, communication hub 301 provides an acknowledgment message to communication network 302. The acknowledgment message includes the network address of communication hub 301. Responsive to receiving the digits, communication network 302 also provides a create connection message to communication hub 305. The create connection message to communication hub 305 creates a full duplex bearer connection between communication network 302 and communication hub 305. Responsive to the connection setup, communication hub 305 provides an acknowledgment message to communication network 302. The acknowledgment message includes the network address of communication hub 305. The create connection message to communication hub 305 includes the address of communication hub 301 and includes a continuity test instruction. Responsive to the continuity test instruction, communication hub 305 provides a request for continuity acknowledgment message to communication hub 301. Substantially concurrently, communication network 302 provides an update message to communication hub 301 that includes the address of communication hub 305. Responsive to the request for continuity acknowledgment message, communication hub 301 provides a continuity acknowledgment message to communication hub 305.

The request for continuity acknowledgment and the continuity acknowledgment message are provided in-band over the bearer channel by communication hubs 305 and 301. Advantageously, the completion of this messaging in-band ensures the bearer channel connectivity prior to call completion. Responsive to receiving the continuity acknowledgment message, communication hub 305 provides a continuity confirmation message to communication network 302 confirming the continuity acknowledgment message was received and provides call tones to call device 300. In this example the call tones are ringback call tones. Substantially concurrently to receiving the continuity confirmation message, communication network 302 provides an IAM message to second communication network 304. Responsive to processing the IAM message, second communication network 304 provides an ACM message to communication network 302. Responsive to the called device (not shown) going off-hook, second communication network 304 provides an answer (ANM) message to communication network 302.

Responsive to receiving the ANM message, communication network 302 provides an ANM message to communication hub 305. Responsive to receiving the ANM message, communication hub 305 stops providing the ringback tones to call device 300. Substantially concurrently, communication network 302 modifies the half duplex bearer connection between communication hub 301 and communication network 302 to a full duplex bearer connection to complete the call.

Those skilled in the art will appreciate that the continuity test could be performed on all calls. The continuity test could also be performed on a random unbiased basis for a certain percentage of calls based upon request from communication network 302. The request could be based on a frequency index established and adjusted based on the bearer network stability and availability. In some examples of the invention, the request for the continuity acknowledgment message and the continuity acknowledgment message could be retransmitted a pre-determined number of times at pre-determined intervals with duplicated received messages ignored.

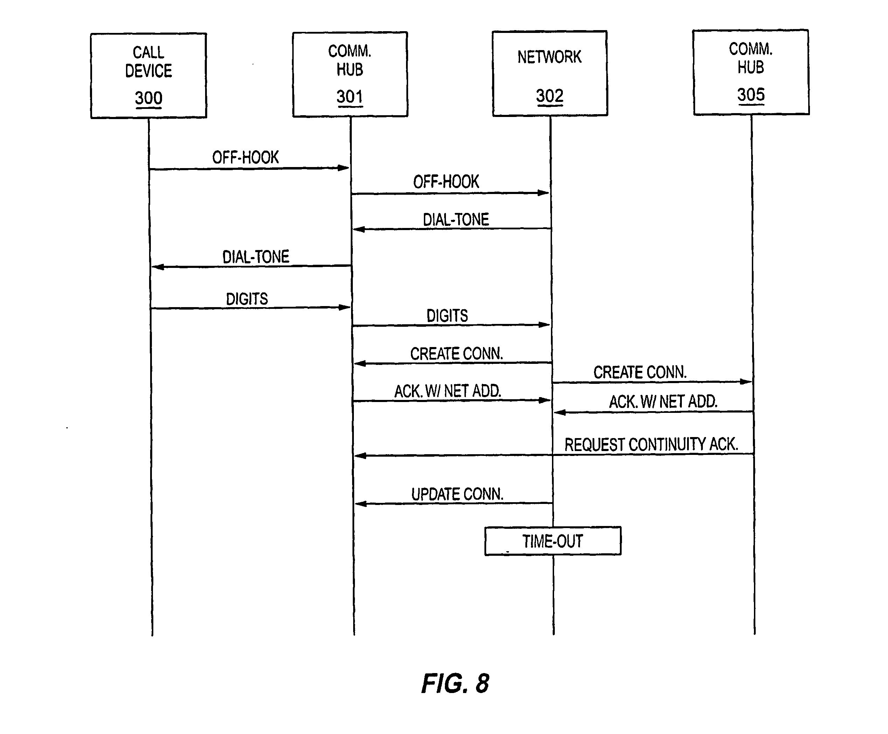

FIG. 8 is a message sequence chart illustrating an example according to the present invention of a failed continuity test between communication hubs 301 and 305. In this example the call session is an on-network to off-network call session between communication hubs 301 and 305. On FIG. 8 call device 300 goes off-hook and an off-hook event is detected in communication hub 301. Communication hub 301 provides an off-hook message to communication network 302. Responsive to receiving the off-hook message, communication network 302 provides a dial tone to call device 300 via communication hub 301. Caller entered digits are transmitted from call device 300 to communication network 302 via communication hub 301. Responsive to receiving the digits, communication network 302 provides a create connection message to communication hub 301. The create connection message to communication hub 301 creates a half duplex bearer connection between communication network 302 and communication hub 301. Responsive to the connection setup, communication hub 301 provides an acknowledgment message to communication network 302. The acknowledgment message includes the network address of communication hub 301. Responsive to receiving the digits, communication network 302 also provides a create connection message to communication hub 305. The create connection message to communication hub 305 creates a full duplex bearer connection between communication network 302 and communication hub 305. Responsive to the connection setup, communication hub 305 provides an acknowledgment message to communication network 302. The acknowledgment message includes the network address of communication hub 305. The create connection message to communication hub 305 includes the address of communication hub 301 and includes a continuity test instruction. Responsive to the continuity test instruction, communication hub 305 provides a request for continuity acknowledgment to communication hub 301. Substantially concurrently, communication network 302 provides an update message to communication hub 301 that includes the address of communication hub 305. Communication network 302 also starts an internal timer. In this case the bearer channel is inoperative and the continuity acknowledgment message is not received in communication hub 305. The internal timer in communication network 302 times-out before the continuity confirmation message from communication hub 305 is received. Responsive to the timer timing-out, communication network 302 clears the call. In another example, communication hub 305 could start an internal timer and send an error message to communication network 302 if the continuity acknowledgment message is not received prior to the timer-out of the timer. In this case communication network 302 clears the call responsive to receiving the error message from communication hub 305.

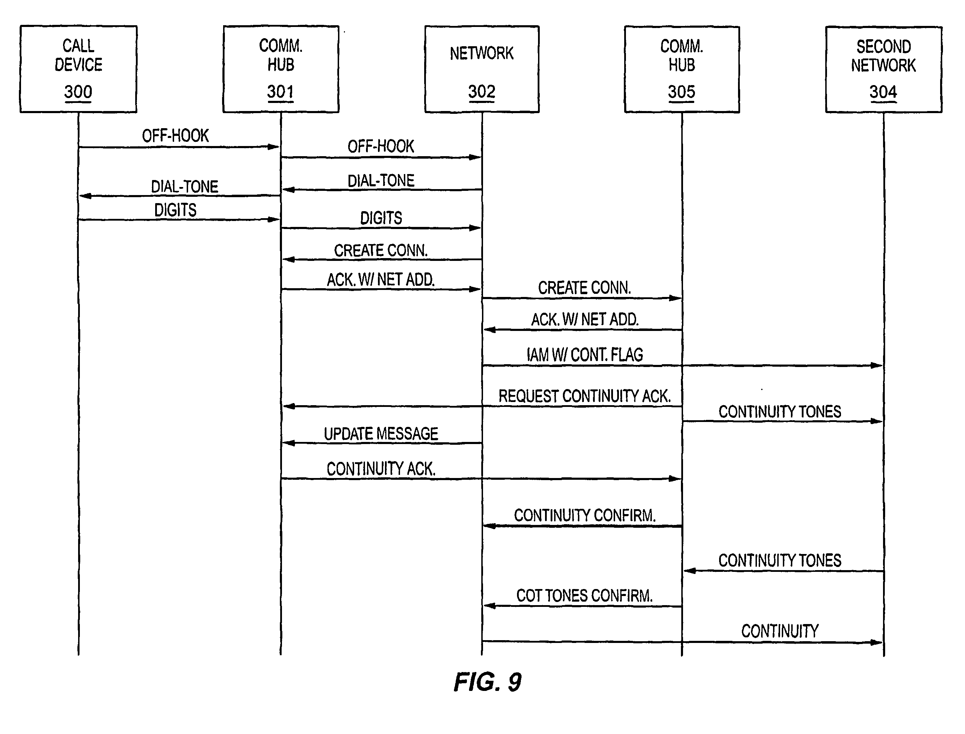

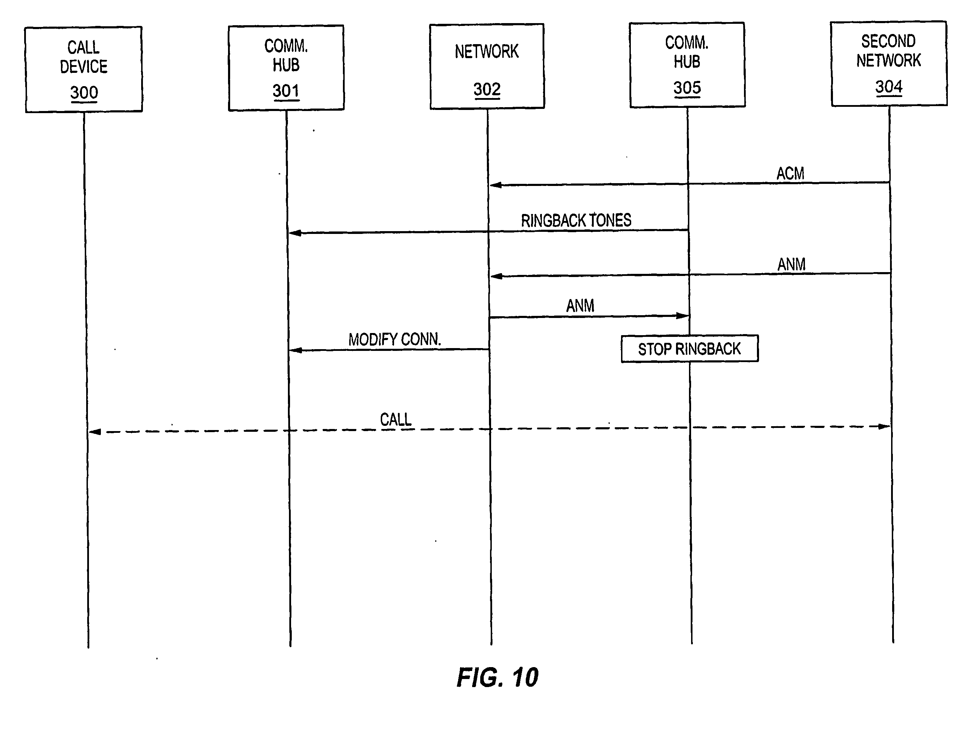

FIGS. 9 and 10 illustrate a message sequence chart illustrating an example of a successful continuity test in communication network 302 and in second communication network 304. In this example the call session is an on-network to off-network call session between communication hubs 301 and 305. On FIGS. 9 and 10, call device 300 goes off-hook and an off-hook event is detected in communication hub 301. Communication hub 301 provides an off-hook message to communication network 302. Responsive to receiving the off-hook message, communication network 302 provides a dial tone to call device 300 via communication hub 301. Caller entered digits are transmitted from call device 300 to communication network 302 via communication hub 301. Responsive to receiving the digits, communication network 302 provides a create connection message to communication hub 301. The create connection message to communication hub 301 creates a half duplex bearer connection between communication network 302 and communication hub 301. Responsive to the connection setup, communication hub 301 provides an acknowledgment message to communication network 302. The acknowledgment message includes the network address of communication hub 301. Responsive to receiving the digits, communication network 302 also provides a create connection message to communication hub 305. The create connection message to communication hub 305 creates a full duplex bearer connection between network 302 and communication hub 305. Responsive to the connection setup, communication hub 305 provides an acknowledgment message to communication network 302. The acknowledgment message includes the network address of communication hub 305. The create connection message to communication hub 305 includes the address of communication hub 301, a continuity test instruction to perform the continuity test of the bearer channel in communication network 302, and a continuity test tone instruction to perform a continuity test of the bearer channel in second communication network 304. Communication network 302 also sends an IAM message to second communication network 304. The IAM message includes a continuity test flag to inform second communication network 304 that a continuity test will be performed before the call is completed.

Responsive to the continuity test instruction, communication hub 305 provides a request for continuity acknowledgment message to communication hub 301 and provides continuity test tones to second communication network 304. Substantially concurrently, communication network 302 provides an update message to communication hub 301 that includes the address of communication hub 305. Responsive to the request for continuity acknowledgment message, communication hub 301 provides a continuity acknowledgment message to communication hub 305.

Second communication network 304 process the continuity test tones by looping the tones back to communication hub 305. Responsive to receiving the continuity acknowledgment message, communication hub 305 provides a continuity confirmation message to communication network 302. The continuity confirmation message confirms receipt of the continuity acknowledgment message, and thus, the bearer channel connectivity in communication network 302. Responsive to receiving the continuity test tones back from second communication network 304, communication hub 305 provides a continuity test tone confirmation message to communication network 302. The continuity test tone confirmation message confirms receipt of the continuity tones, and thus, the bearer channel connectivity in second communication network 304. Responsive to receiving the continuity test tone confirmation message, communication network 302 provides a continuity test message to second communication network 304. The continuity test message confirms the continuity test is complete and successful.

Responsive to the continuity test message, second communication network 304 provides an ACM message to communication network 302. Responsive to receiving the continuity acknowledgment message and the continuity test tones communication hub 305 provides call tones to call device 300. In this case the call tones are ringback call tones. Responsive to receiving an ANM message from second communication network 304, communication network 302 provides an ANM message to communication hub 305. Responsive to receiving the ANM message, communication hub 305 stops providing the ringback tones to call device 300. Substantially concurrently, communication network 302 modifies the half duplex bearer connection between communication hub 301 and communication network 302 to a full duplex bearer connection to complete the call.

The continuity test in second communication network 304 could be performed on all calls. The continuity test in second communication network 304 could also be performed on a random unbiased basis for a certain percentage of calls based upon request from communication network 302. The request could be based on a frequency index established and adjusted based on the bearer network stability and availability. In some examples of the invention, the request continuity test message, the continuity acknowledgment message, and the continuity tones could be retransmitted a pre-determined number of times at pre-determined intervals with duplicated received messages ignored.

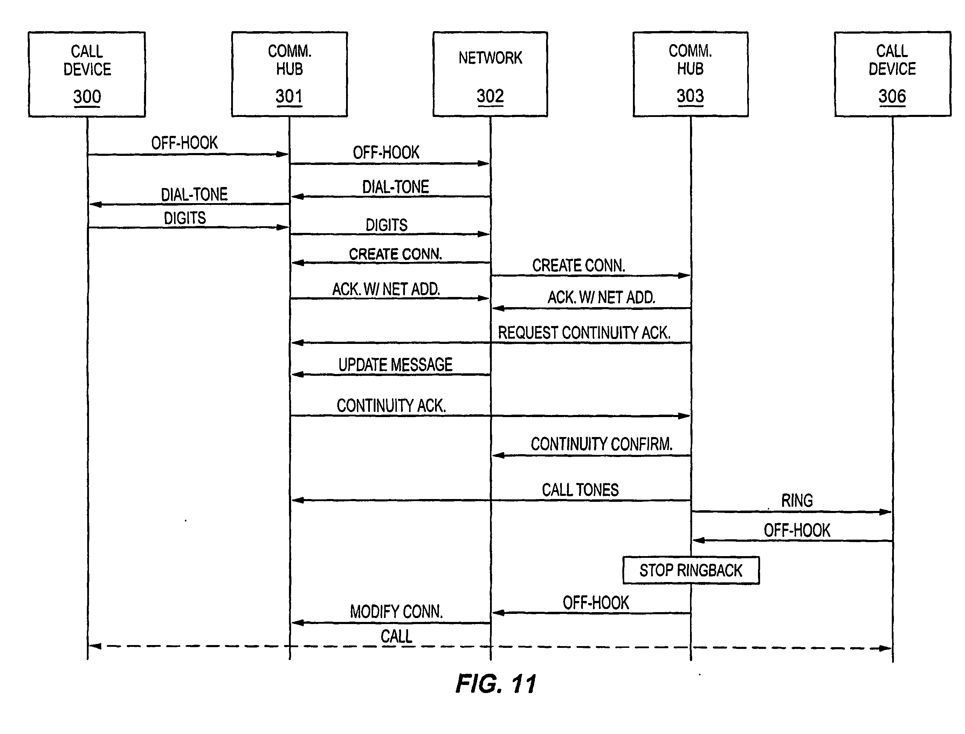

FIG. 11 illustrates a message sequence chart illustrating an example of a successful continuity test for an on-network call session between communication hubs 301 and 303 according to the present invention. On FIG. 11, call device 300 goes off-hook and an off-hook event is detected in communication hub 301. Communication hub 301 provides an off-hook message to communication network 302. Responsive to receiving the off-hook message, communication network 302 provides a dial tone to call device 300 via communication hub 301. Caller entered digits are transmitted from call device 300 to communication network 302 via communication hub 301. Responsive to receiving the digits, communication network 302 provides a create connection message to communication hub 301. The create connection message to communication hub 301 creates a half duplex bearer connection between communication network 302 and communication hub 301. Responsive to the connection setup, communication hub 301 provides an acknowledgment message to communication network 302. The acknowledgment message includes the network address of communication hub 301. Responsive to receiving the digits, communication network 302 also provides a create connection message to communication hub 303. The create connection message to communication hub 303 creates a full duplex bearer connection between network 302 and communication hub 303. Responsive to the connection setup, communication hub 303 provides an acknowledgment message to communication network 302. The acknowledgment message includes the network address of communication hub 303. The create connection message to communication hub 303 includes the address of communication hub 301 and includes a continuity test instruction. Responsive to the continuity test instruction, communication hub 303 provides a request for continuity acknowledgment to communication hub 301. Substantially concurrently, communication network 302 provides an update message to communication hub 301 that includes the address of communication hub 303. Responsive to the request for continuity acknowledgment message, communication hub 301 provides a continuity acknowledgment message to communication hub 303.

The request for continuity acknowledgment message and the continuity acknowledgment message are provided in-band over the bearer channel by communication hubs 303 and 301. Advantageously, the completion of this messaging in-band ensures the bearer channel connectivity prior to call completion. Responsive to receiving the continuity acknowledgment message, communication hub 303 provides a continuity confirmation message to communication network 302 confirming the continuity acknowledgment message was received and provides call tones to call device 300. In this case the call tones are ringback tones.

Responsive to receiving an off-hook signal from call device 306, communication hub 303 stops the ringback tones and provides an off-hook message to communication network 302. Responsive to receiving the off-hook message, communication network 302 modifies the half duplex bearer connection between communication hub 301 and communication network 302 to a full duplex bearer connection to complete the call.

The continuity test could be performed on all calls. The continuity test could also be performed on a random unbiased basis for a certain percentage of calls based upon request from communication network 302. The request could be based on a frequency index established and adjusted based on the bearer network stability and availability. In some examples of the invention, the request continuity test message and continuity acknowledgment message could be retransmitted a pre-determined number of times at pre-determined intervals with duplicated received messages ignored.

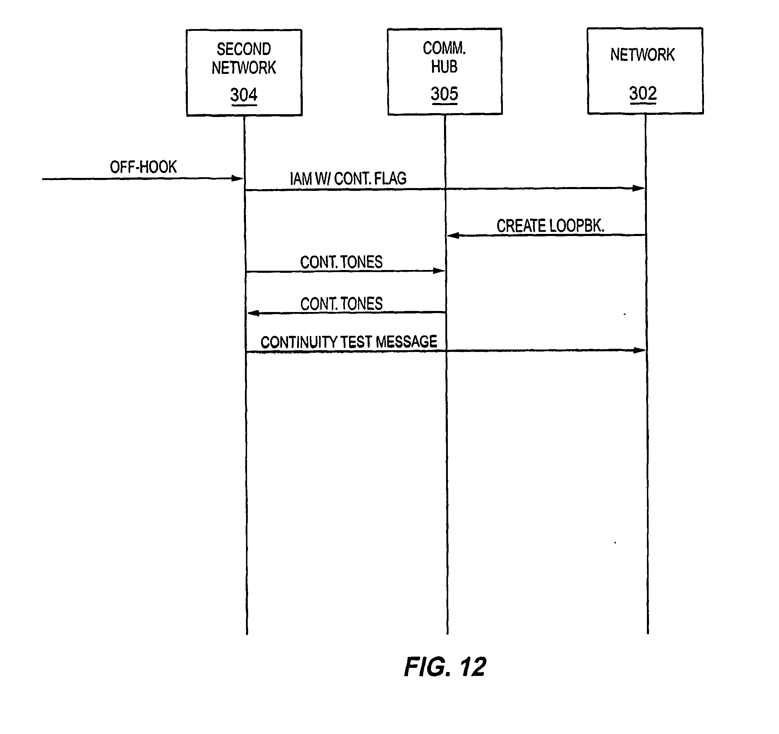

FIG. 12 illustrates a message sequence chart illustrating an example of a continuity test for an off-network to on-network call session according to the present invention. On FIG. 12, an off-hook signal is detected in second communication network 304 from a call device (not shown). Second communication network 304 processes the off-hook detection in a conventional manner to obtain the caller entered digits. Responsive to receiving the caller entered digits, second communication network 304 provides an IAM message to communication network 302 via communication hub 305. The IAM message includes a continuity test flag that indicates to communication network 302 that a continuity test is being performed in second communication network 304. Responsive to receiving the IAM message, communication network 302 provides a create loopback message to communication hub 305. The create loopback message provides communication hub 305 with loopback instructions for the continuity test tones. Second communication network 304 then provides continuity test tones, which are looped back to second communication network 304 by communication hub 305. Responsive to receiving the continuity test tones back, second communication network 304 provides a continuity test message to communication network 302 to indicate a successful test. Responsive to the continuity test message, communication network 302 could perform a continuity test of its bearer channel as described above or process the call in a conventional manner.

In another example according to the present invention, communication network 302 could provide a create loopback message to communication hub 301 responsive to receiving the IAM with continuity test flag. In this case the continuity test tones would be looped back by communication hub 301, thus eliminating the need for a separate continuity test in communication network 302.

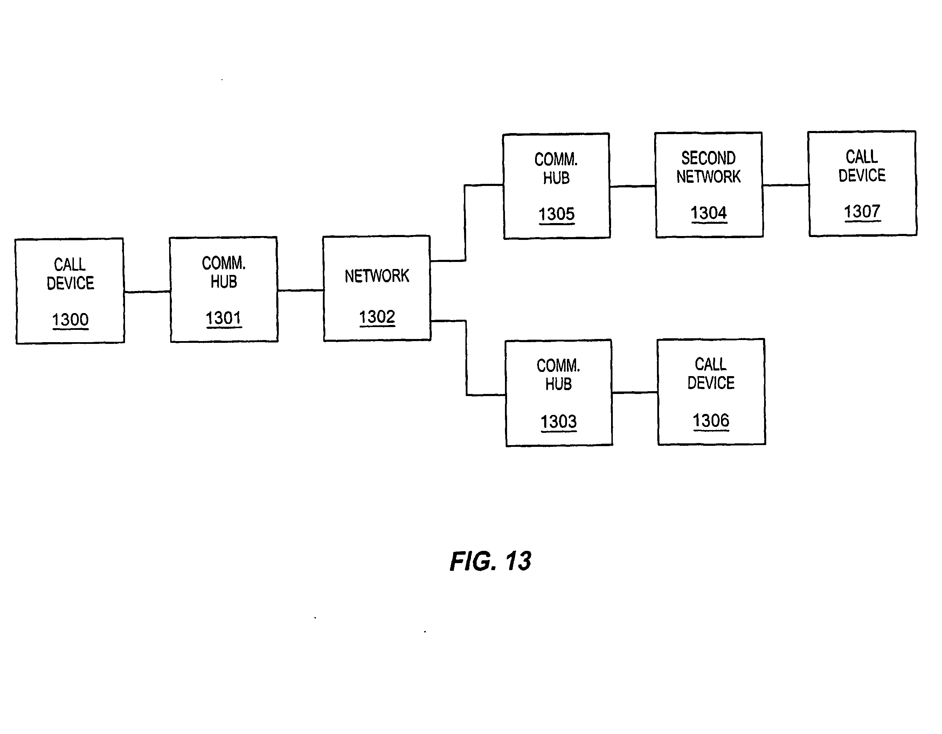

### Another Communication System - FIG. 13

FIG. 13 illustrates a communication system according to the present invention. FIG. 13 depicts call devices 1300, 1306, and 1307, communication hubs 1301, 1303, and 1305, communication network 1302 and second communication network 1304. Communication hub 1301 is connected to call device 1300 and communication network 1302. Communication network 1302 is connected to communication hubs 1303 and 1305. Second communication network 1304 is connected to communication hub 1305 and call device 1307. Communication hub 1303 is connected to call device 1306.

Call devices 1300, 1306, and 1307 could be conventional call devices that use digital and analog telephony format. Some examples of call devices 1300, 1306, and 1307 are devices configured to provide voice, data, and video communications. Communication network 1302 and second communication network 1304 could be different communication networks. In some examples of the present invention, communication network 1302 is a packet network and second communication network 1304 could be any other network including without limitation, a wireless network, a packet network, an internet, or the PSTN. Those skilled in the art will appreciate the communication networks 1302 and 1304 would include various conventional components not shown on FIG. 13 for clarity.

Communication hub 1301, could be any communication device capable of: 1) receiving an in-band call tone request message that includes a request to provide call tones to call device 1300, 2) generating and transmitting a continuity acknowledgment message, and 3) providing the call tones to call device 1300. Some examples of communication hub 1301 include without limitation, a switch, a private branch exchange (PBX), and a residential communication hub.

Communication hub 1305 could be any communication device capable of interfacing between communication network 1302 and second communication network 1304. Communication hub 1305 could: 1) receive an in-band call tone request message that includes a request to provide call tones to one of call devices 1300 and 1307, 2) generate and transmit a continuity acknowledgment message, and 3) provide the call tones to one of call devices 1300 and 1307. Some examples of communication hub 1305 include without limitation, a network device such as a voice gateway and a switch.

Communication hub 1303, could be any communication device capable of: 1) receiving an in-band call tone request message that includes a request to provide call tones to call device 1306, 2) generating and transmitting a continuity acknowledgment message, and 3) providing the call tones to call device 1306. Some examples of communication hub 1301 include without limitation, a switch, a PBX, and a residential communication hub.

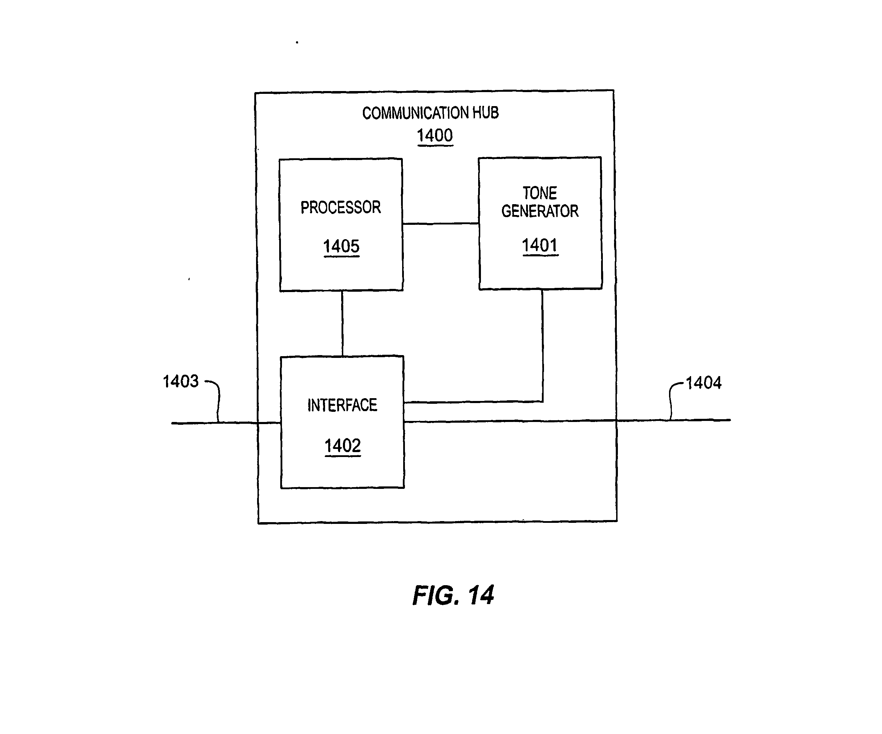

### The Communication Hub - FIG. 14

FIG. 14 depicts an example of communication hubs 1301, 1303, and 1305 according to the present invention, namely communication hub 1400. Those skilled in the art will appreciate numerous variations that do not depart from the present invention. Those skilled in the art will also appreciate that various features described below could be combined with the above described embodiment to form multiple variations of the invention.

Communication hub 1400 is comprised of a processor 1405, a tone generator 1401, and an interface 1402. Interface 1402 is connected to processor 1405, tone generator 1401, and communication paths 1403 and 1404. Communication paths 1403 and 1404 could be conventional comununication paths. Processor 1405 is also connected to tone generator 1401. Those skilled in the art will appreciate that in some embodiments of the invention tone generator 1401 and interface 1402 could be a part of processor 1405, such as where tone generator 1401 and interface 1402 are in the same processing circuitry or included on the same chip as processor 1405. Those skilled in the art will also understand that communication hub 1400 would include other conventional components not shown on FIG. 14 for clarity, depending on the type of device and its operation in a network environment.

Processor 1405 could be any processor capable of processing various messages to: 1) generate the continuity acknowledgment message, 2) direct tone generator 1401 to provide the call tones to a call device, 3) direct tone generator 1401 to stop providing call tones to the call device, 4) direct tone generator 1401 to provide continuity test tones, and 5) generate a request for a continuity acknowledgment message from another communication hub. Tone generator 1401 could be a conventional device that provides tones under the control of processor 1405.

Interface 1402 could be any interface that receives messages for processor 1405 and transmits messages for processor 1405. Interface 1402 could also be a voice interface that acts as a POTS interface or packet interface, supervises messages, channels voice communications, or resolves contention between voice lines or voice communication paths. Interface 1402 could also be a data or video interface that manages data stream, video stream, performs asynchronous time division, or concentrates data and video lines or paths. One example of interface 1403 includes without limitation an asynchronous transfer mode (ATM) interface capable of handling ATM messaging for processor 1405 over communication path 1404 and capable of handling analog signaling for processor 1405 over communication path. Interface 1402 could handle numerous such communication paths although only communication paths 1403 and 1404 are shown for clarity.

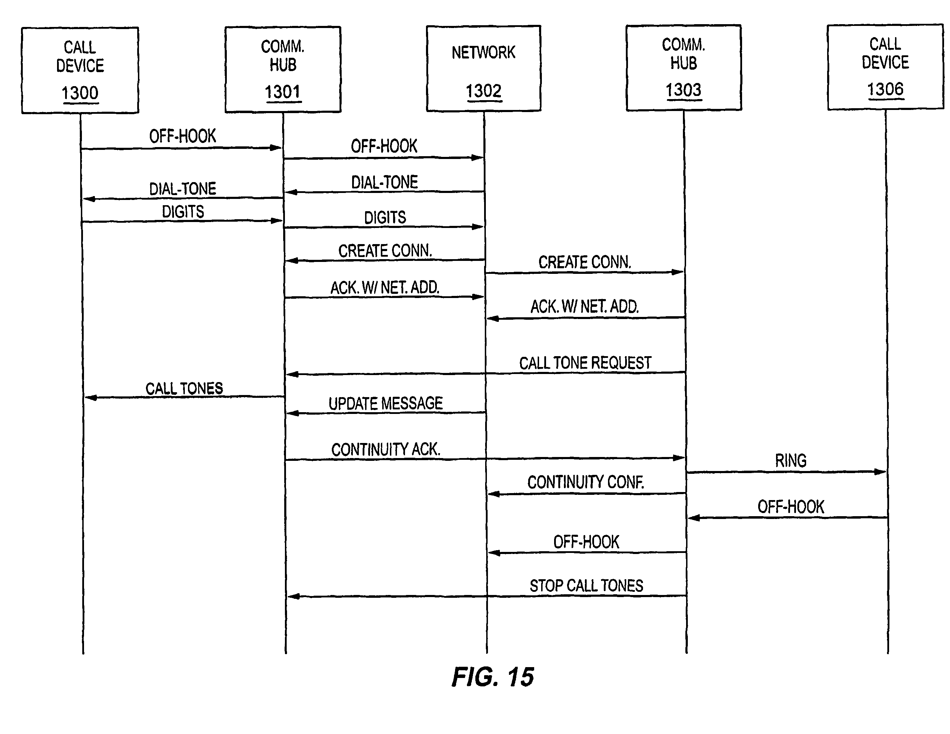

### Operation -- FIGS. 15-22

FIGS. 15-22 illustrate message sequence charts for various examples of the operation of a communication hub according to the present invention. It is anticipated, however, that various modifications to these examples will be readily apparent to those skilled in the art. The principles defined herein may also be applied to other embodiments without the use of inventive faculty. Thus, the present invention is not intended to be limited to the examples shown below but is to be accorded the widest scope consistent with the principles and novel features disclosed herein.

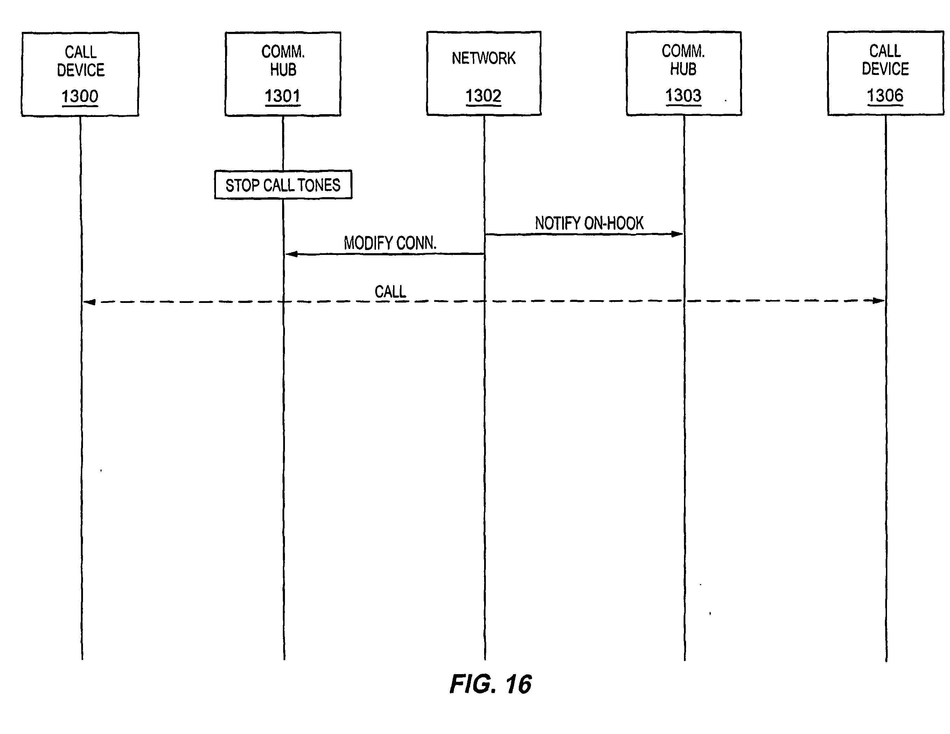

FIGS. 15-16 illustrate a message sequence chart illustrating an example according to the present invention of an on-network call session between communication hubs 1301 and 1303. In this example continuity testing is accomplished by exchanging call tone request and continuity acknowledgment messages over the bearer channel. On FIGS. 15 and 16, call device 1300 goes off-hook and an off-hook event is detected in communication hub 1301. Communication hub 1301 provides an off-hook message to communication network 1302. Responsive to receiving the off-hook message, communication network 1302 provides a dial tone to call device 1300 via communication hub 1301. Caller entered digits are transmitted from call device 1300 to communication network 1302 via communication hub 1301. Responsive to receiving the digits, communication network 1302 provides a create connection message to communication hub 1301. The create connection message to communication hub 1301 creates a half duplex bearer connection between communication network 1302 and communication hub 1301. Responsive to the connection setup, communication hub 1301 provides an acknowledgment message to communication network 1302. The acknowledgment message includes the network address of communication hub 1301. Responsive to receiving the digits, communication network 1302 also provides a create connection message to communication hub 1303. The create connection message to communication hub 1303 creates a full duplex bearer comection between network 1302 and communication hub 1303. Responsive to the connection setup, communication hub 1303 provides an acknowledgment message to communication network 1302. The acknowledgment message includes the network address of communication hub 1303. The create connection message to communication hub 1303 includes the address of communication hub 1301 and includes a request continuity test instruction. Responsive to receiving the request continuity test instruction, communication hub 1303 provides an in-band call tone request message to communication hub 1301 that includes a request to provide call tones to call device 1300. In this case the call tones are ringback tones.

Responsive to receiving the call tone request message, communication hub 1301 provides the call tones to call device 1300. Substantially concurrently, communication network 1302 provides an update message to communication hub 1301 that includes the address of communication hub 1303. Responsive to the update message, communication hub 1301 provides a continuity acknowledgment message to communication hub 1303. Advantageously, the call tone request message and the continuity acknowledgment message are provided over the bearer channel. Thus, if the continuity acknowledgment message is received in communication hub 1303, bearer channel connectivity is confirmed.

Responsive to receiving the continuity acknowledgment message, communication hub 1303 rings call device 1306 to announce the incoming call. Communication hub 1303 also provides a continuity confirmation message to communication network 1302 to confirm receipt of the continuity acknowledgment message. It should be noted that in some examples of the present invention, communication network 1302 starts an internal timer responsive to sending the request continuity test instruction to communication hub 1303. If the internal timer times-out and the continuity confirmation message is not received, the continuity test has failed and communication network 1302 clears the call. In other examples of the present invention, communication hub 1303 could send an error message to communication network 1302 if the continuity acknowledgment message is not received. Responsive to receiving the error message, communication network 1302 clears the call.

Responsive to receiving an off-hook message from call device 1306, communication hub 1303 provides an off-hook message to communication network 1302. Substantially concurrently, communication hub 1303 provides a stop call tones message to communication hub 1301. Communication hub 1301, responsive to receiving the stop call tones message, stops providing the call tones to call device 1300. Responsive to receiving the off-hook message, communication network 1302 provides a request for on-hook notification message to communication hub 1303 and modifies the connection between network 1302 and communication hub 1301 to a full duplex bearer connection to complete the call between call device 1300 and call device 1306.

Those skilled in the art will appreciate that the continuity test provided through the call tone messaging could be performed on all calls as described above. The continuity test could also be performed on a random unbiased basis for a certain percentage of calls based upon request from communication network 1302. The request could be based on a frequency index established and adjusted based on the bearer network stability and availability. In examples where the continuity test is not requested, the continuity acknowledgment from communication hub 1301 is optional. In this case communication hub 1303 would ring call device 1306 responsive to the time-out of an internal timer. It should be noted that the continuity acknowledgment message could also be used to confirm that the call tones are being provided by communication hub 1301. In other examples of the invention, the call tone request message and continuity acknowledgment message could be retransmitted a pre-determined number of times at pre-determined intervals with duplicated received messages ignored.

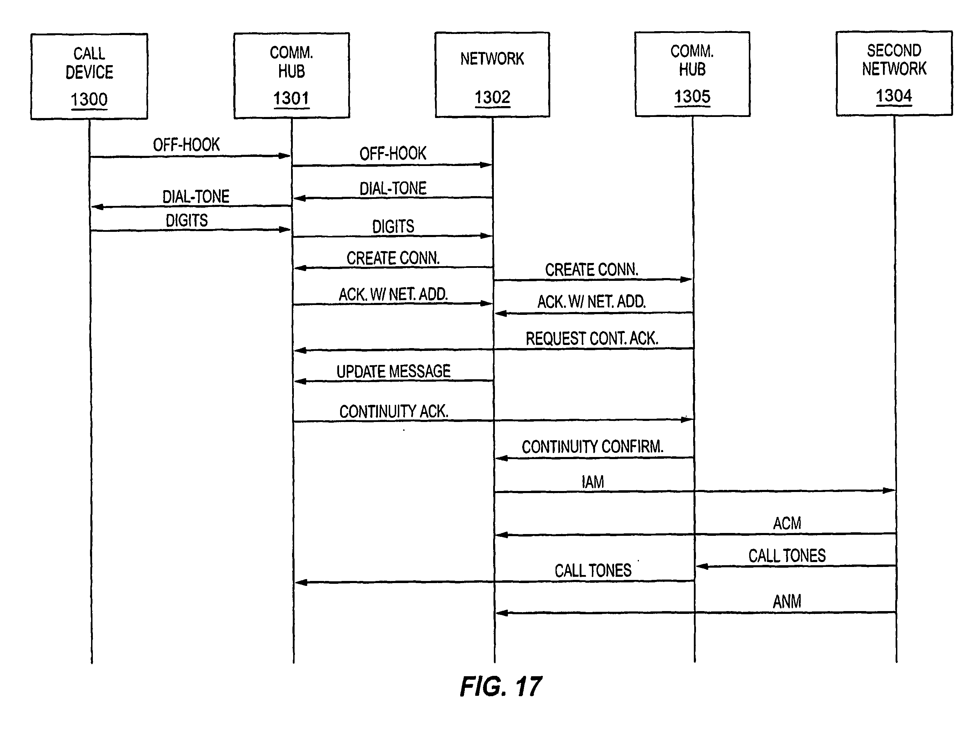

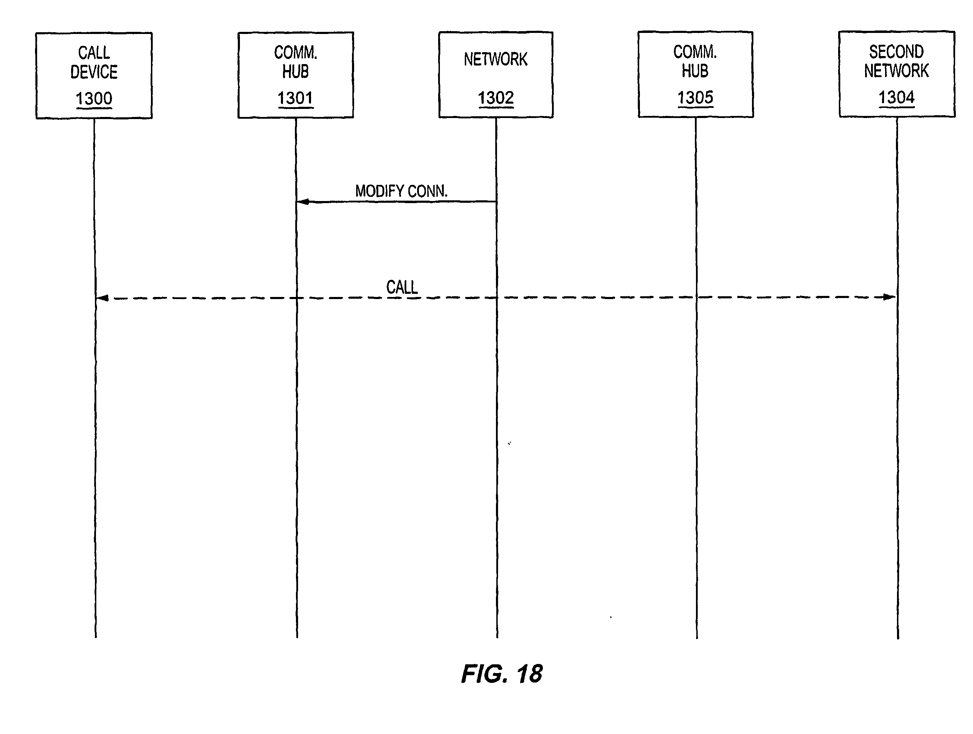

FIGS. 17 and 18 illustrate a message sequence chart for an example, according to the present invention, of an on-network to off-network call session between communication hubs 1301 and 1305. Those skilled in the art will appreciate that in this example communication network 1302 performs a separate continuity test of the bearer channel as the call tones are provided by second network 1304. On FIGS. 17 and 18, call device 1300 goes off-hook and an off-hook event is detected in communication hub 1301. Communication hub 1301 provides an off-hook message to communication network 1302. Responsive to receiving the off-hook message, communication network 1302 provides a dial tone to call device 1300 via communication hub 1301. Caller entered digits are transmitted from call device 1300 to communication network 1302 via communication hub 1301. Responsive to receiving the digits, communication network 1302 provides a create connection message to communication hub 1301. The create connection message to communication hub 1301 creates a half duplex bearer connection between communication network 1302 and communication hub 1301. Responsive to the connection setup, communication hub 1301 provides an acknowledgment message to communication network 1302. The acknowledgment message includes the network address of communication hub 1301. Responsive to receiving the digits, communication network 1302 also provides a create connection message to communication hub 1305. The create connection message to communication hub 1305 creates a full duplex bearer connection between network 1302 and communication hub 1305. Responsive to the connection setup, communication hub 1305 provides an acknowledgment message to communication network 1302. The acknowledgment message includes the network address of communication hub 1305. The create connection message to communication hub 1305 includes the address of communication hub 1301 and includes a request continuity test instruction. Substantially concurrently with the create connection message for the full duplex bearer connection, communication network 1302 provides an update message to communication hub 1301 that includes the network address of communication hub 1305. Responsive to the continuity test request message, communication hub 1305 provides a request for continuity acknowledgment message to communication hub 1301. Responsive to the request for continuity acknowledgment message, communication hub 1301 provides a continuity acknowledgment message to communication hub 1305. Advantageously, the request for continuity acknowledgment and the continuity acknowledgment message are provided over the bearer channel, thus ensuring the bearer channel connectivity prior to call completion. Responsive to receiving the continuity acknowledgment message, communication hub 1305 provides a continuity confirmation message to communication network 1302 confirming the continuity acknowledgment message was received.

Substantially concurrently, to receiving the confirmation message, communication network 1302 provides an IAM message to second communication network 1304. Responsive to processing the IAM message, second communication network 1304 provides an ACM message to communication network 1302. Second communication network 1304 also provides call tones to call device 1300 via communication hub 1305. Responsive to the called device (not shown) going off-hook, second communication network 1304 provides an answer (ANM) message to communication network 1302. Responsive to receiving the ANM message, communication network 1302 modifies the half duplex connection between communication hub 1301 and communication network 1302 to a full duplex bearer connection to complete the call.

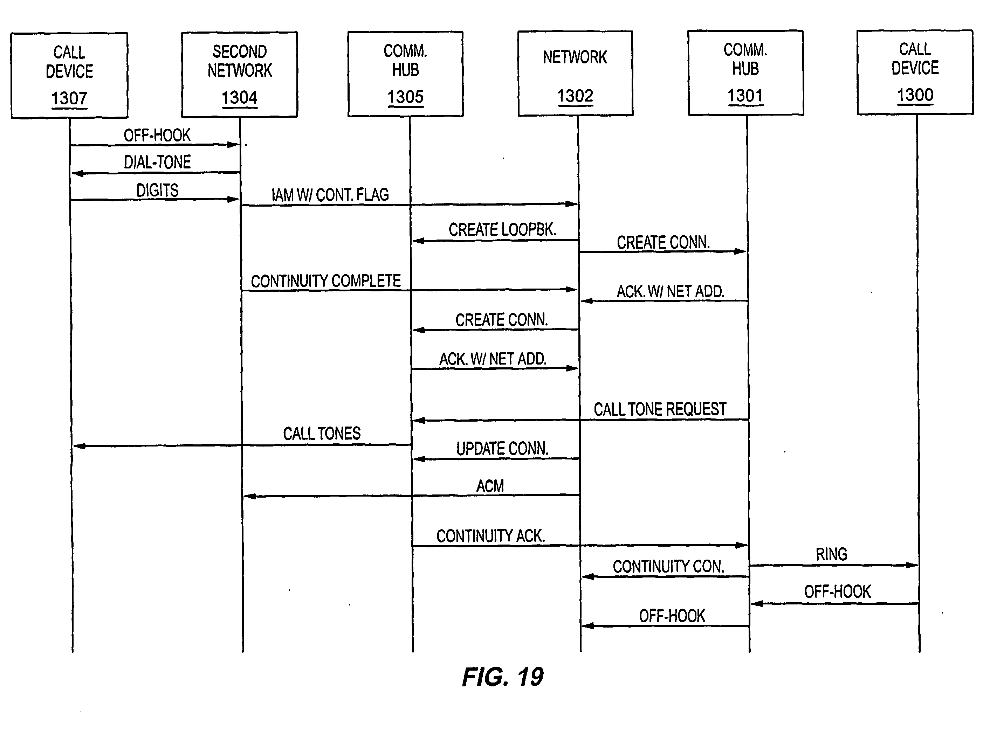

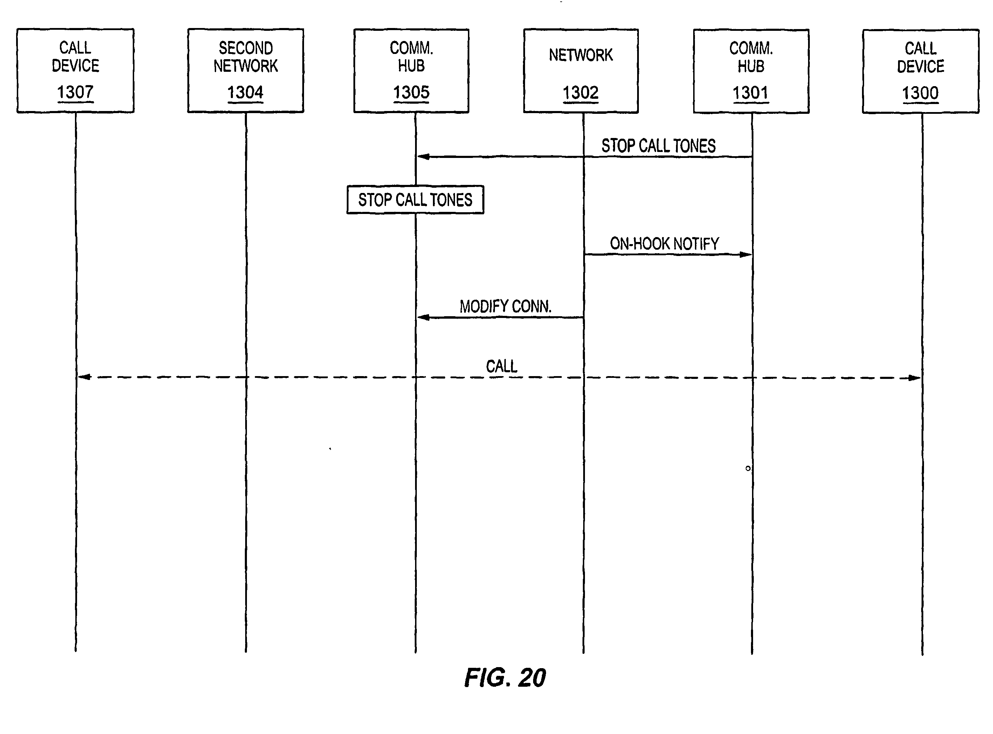

FIGS. 19 and 20 illustrate a message sequence chart for an example, according to the present invention, of an off-network to on-network call session between communication hubs 1301 and 1305. In this example continuity testing is accomplished by exchanging call tone request and continuity acknowledgment messages over the bearer channel. On FIGS. 19 and 20, call device 1307 goes off-hook. Second communication network 1304 detects the off-hook event and provides a dial tone to call device 1307. Responsive to receipt of caller entered digits, second communication network 1304 provides an IAM message to communication network 1302 via communication hub 1305. The IAM message includes a continuity test flag that indicates to communication network 1302 that a continuity test is being performed in second communication network 1304. Responsive to receiving the IAM message, communication network 1302 provides a create loopback message to communication hub 1345. The create loopback message provides communication hub 1305 with loopback instructions for the continuity test tone. Second communication network 1304 performs the continuity test. The continuity test comprises transmitting test tones over the bearer channel and waiting for the loopback of the tone by communication hub 1305. Responsive to receiving the continuity test tones back, second communication network 1304 provides a continuity test message to communication network 1302 to indicate a successful test. Responsive to the continuity test message, communication network 1302 provides a create connection message to communication hub 1301. The create connection message to communication hub 1301 creates a full duplex bearer connection between communication network 1302 and communication hub 1301. Responsive to the connection setup, communication hub 1301 provides an acknowledgment message to communication network 1302. The acknowledgment message includes the network address of communication hub 1301. Responsive to receiving the digits, communication network 1302 also provides a create connection message to communication hub 1305. The create connection message to communication hub 1305 creates a half duplex bearer connection between network 1302 and communication hub 1305. Responsive to the connection setup, communication hub 1305 provides an acknowledgment message to communication network 1302. The acknowledgment message includes the network address of communication hub 1305. The create connection message for the full duplex bearer connection includes the network address of communication hub 1305 and includes the continuity test request instruction. Responsive to the continuity test request instruction, communication hub 1301 provides a call tone request message to communication hub 1305 with the request for communication hub 1303 to provide call tones to call device 1307. Responsive to the call tone request message, communication hub 1301 provides the call tones to call device 1307.

Substantially concurrently, communication network 1302 updates communication hub 1305 with the address of communication hub 1301 and provides an ACM message to second communication network 1304. Responsive to providing the call tones to call device 1307, communication hub 1305 provides a continuity acknowledgment message to communication hub 1301. Responsive to receiving the continuity acknowledgment message, communication hub 1301 rings call device 1300 to announce the incoming call. Communication hub 1301 also provides a continuity confirmation message to communication network 1302 to confirm the bearer channel connectivity. Responsive to receiving an off-hook message from call device 1300, communication hub 1301 provides an off-hook message to communication network 1302. Substantially concurrently communication hub 1301 provides a stop call tones message to communication hub 1305. Communication hub 1305, responsive to receiving the stop call tones message, stops providing the call tones to call device 1307. Communication network 1302 sends a request for on-hook notification message to communication hub 1301 and modifies the connection between communication network 1302 and communication hub 1305 to a full duplex bearer connection to complete the call between call device 1307 and call device 1300.

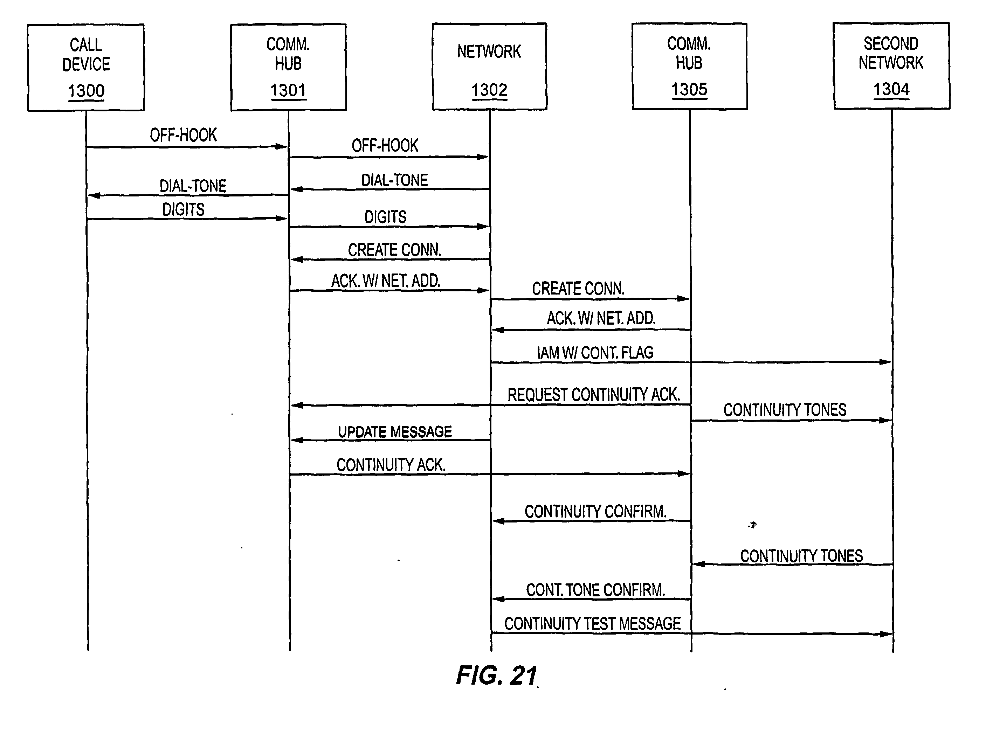

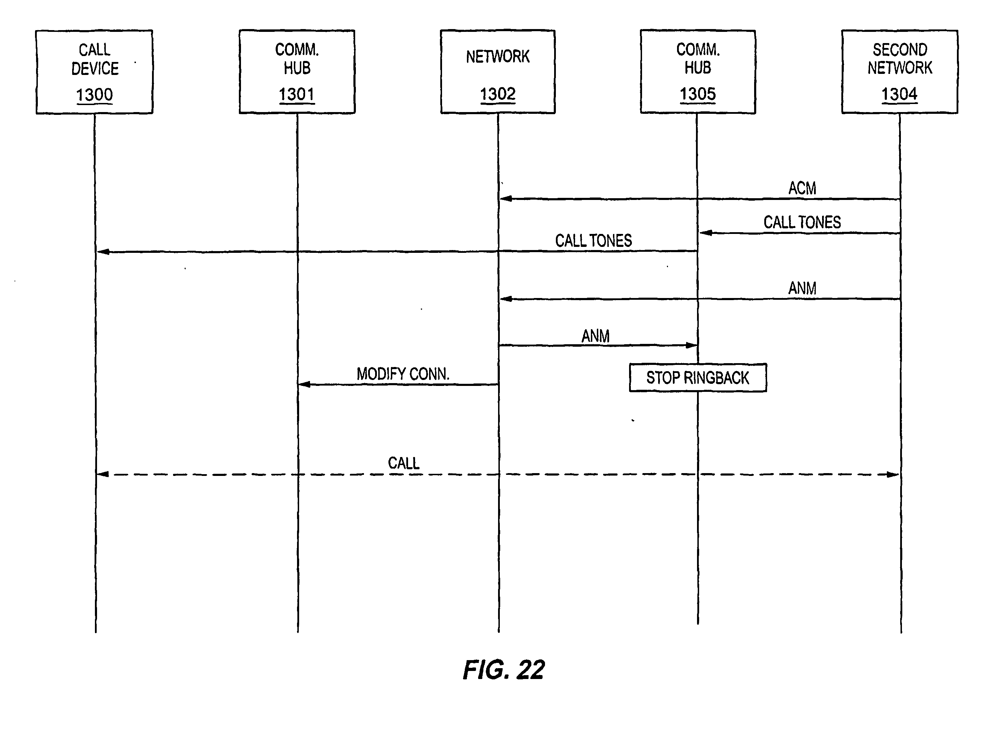

FIGS. 21 and 22 illustrate a message sequence chart for an example of an on-network to off-network call session where the continuity test is performed in communication network 1302 and in second communication network 1304 by a communication hub according the present invention. Those skilled in the art will appreciate that in this example communication network 1302 performs a separate continuity test of the bearer channel in communication network 1302 as the call tones are provided by second network 1304. On FIGS. 21 and 22, call device 1300 goes off-hook and an off-hook event is detected in communication hub 1301. Communication hub 1301 provides an off-hook message to communication network 1302. Responsive to receiving the off-hook message, communication network 1302 provides a dial tone to call device 1300 via communication hub 1301. Caller entered digits are transmitted from call device 1300 to communication network 1302 via communication hub 1301. Responsive to receiving the digits, communication network 1302 provides a create connection message to communication hub 1301. The create connection message to communication hub 1301 creates a half duplex bearer connection between communication network 1302 and communication hub 1301. Responsive to the connection setup, communication hub 1301 provides an acknowledgment message to communication network 1302. The acknowledgment message includes the network address of communication hub 1301. Responsive to receiving the digits, communication network 1302 also provides a create connection message to communication hub 1305. The create connection message to communication hub 1305 creates a full duplex bearer connection between network 1302 and communication hub 1305. Responsive to the connection setup, communication hub 1305 provides an acknowledgment message to communication network 1302. The acknowledgment message includes the network address of communication hub 1305. The create connection message for the full duplex bearer connection includes the network address of communication hub 1301, includes a request continuity test instruction with the request for communication hub 1305 to perform a continuity test of the bearer channel in communication network 1302, and includes a request continuity test tone instruction with a request for communication hub 1305 to perform a continuity test of the bearer channel in second communication network 1304. Communication network 1302 also provides an LAM message to second communication network 1304. The IAM includes a continuity test flag to inform second communication network 1304 that a continuity test will be performed before the call is completed. Responsive to the continuity test instructions, communication hub 1305 provides a request for continuity acknowledgment message to communication hub 1301. Communication hub 1305 also provides continuity test tones to second communication network 1304. Communication network 1302 provides an update message to communication hub 1301 that includes the network address of communication hub 1305. Responsive to receiving the request for the continuity acknowledgment, communication hub 1301 provides a continuity acknowledgment message to communication hub 1305. Responsive to receiving the continuity acknowledgment message, communication hub 1305 provides a confirmation message to communication network 1302 confirming the bearer channel connectivity in communication network 1302. Second communication network 1304 processes the continuity test tones by looping the tones back to communication hub 1305. Responsive to receiving the continuity test tones back from second communication network 1304, communication hub 1305 provides a continuity test tone confirmation message to communication network 1302 confirming receipt of the continuity tones and the bearer channel connectivity in second communication network 1304. Responsive to receiving the continuity test tone confirmation message, communication network 1302 provides a continuity test message to second communication network 1304 to indicate the continuity test success. Responsive to the continuity test message, second communication network 1304 provides an ACM message to communication network 1302. Call tones are provided by second communication network 1304 via communication hub 1305 to call device 1300. Responsive to receiving an ANM message from second communication network 1304, communication network 1302 modifies the connection between communication network 1302 and communication hub 1301 to a full duplex bearer connection to complete the call.

The continuity test in second communication network 1304 could be performed on all calls. The continuity test in second communication network 1304 could also be performed on a random unbiased basis for a certain percentage of calls based upon request from communication network 1302. The request could be based on a frequency index established and adjusted based on the bearer network stability and availability. In some examples of the invention, the request continuity test message, the continuity acknowledgment message, and the continuity tones could be retransmitted a pre-determined number of times at pre-determined intervals with duplicated received messages ignored.

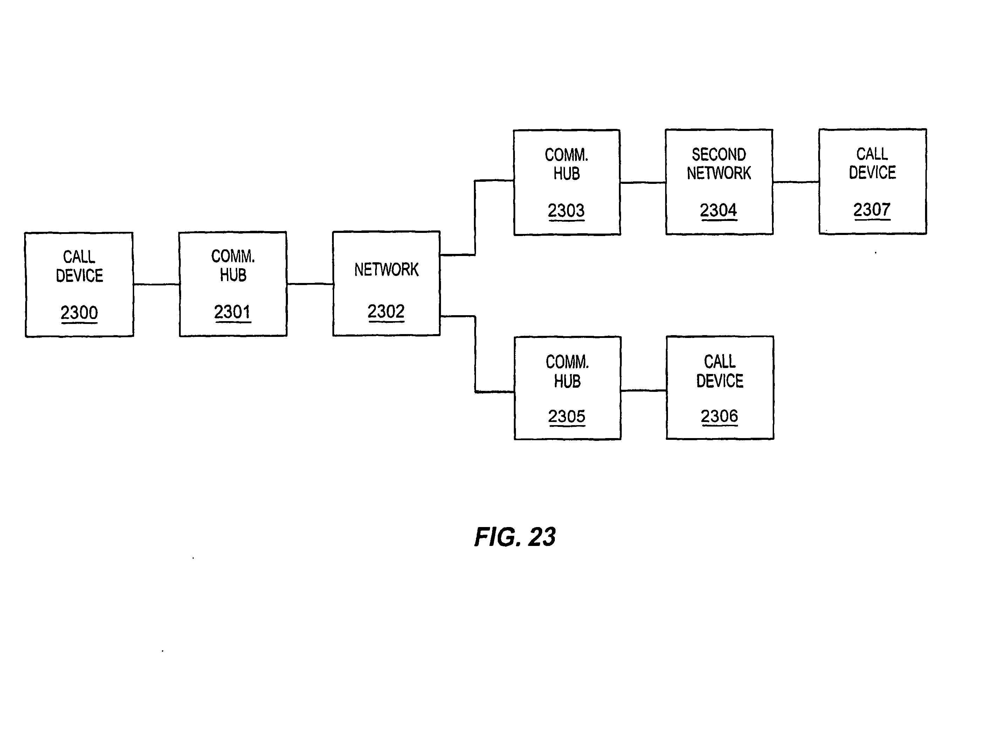

### Another Communication System - FIG. 23

FIG. 23 illustrates a communication system according to the present invention FIG. 23 depicts call devices 2300, 2306, and 2307, communication hubs 2301, 2303, and 2305, communication network 2302, and second communication network 2304. Communication hub 2301 is connected to call device 2300 and communication network 2302. Communication network 2302 is connected to communication hubs 2303 and 2305. Communication hub 2305 is connected to call device 2306. Second communication network 2304 is connected to communication hub 2303 and call device 2307.

Call devices 2300, 2306, and 2307 could be conventional call devices that use digital and analog telephony format. Some examples of call devices 2300, 2306, and 2307 are devices configured to provide voice, data, and video communications. Communication network 2302 and second communication network 2304 could be different communication networks. In some examples of the present invention, communication network 2302 is a packet network and second communication network 2304 could be any other network including without limitation, a wireless network, a packet network, an internet, or the PSTN. Those skilled in the art will appreciate the communication networks 2302 and 2304 would include various conventional components not shown on FIG. 23 for clarity.

Communication hub 2301, could be any communication device capable of: 1) receiving an in-band call tone request message that includes a request to provide call tones to call device 2300, and 2) process the call tone request message to provide call tones to call device 2300. Communication hub 2305 could be any communication device capable of: 1) providing the call tone request message that includes the request to provide call tones to call device 2300, and 2) process a confirmation message that confirms the call tones are being provided to call device 2300. Some examples of communication hubs 2301 and 2305 include without limitation, a switch, a private branch exchange (PBX), and a residential communication hub. Communication hub 2301 could also incorporate the features of communication hub 2305 to generate an in-band call tone request message to provide call tones to call device 2306 and process a confirmation message that confirms call tones are being provided to call device 2306. Similarly, communication hub 2305 could incorporate the features of communication hub 2301 to receive the call tone request message and provide call tones to call device 2306.

Communication hub 2303, could be any communication device capable of interfacing between communication network 2302 and second communication network 2304. Communication hub 2303 could also incorporate the features of communication hubs 2301 and 2305 to process an in-band call tone request message to provide call tones to call device 2307. Communication hub 2303 could also generate call tone request messages for communication hubs 2301 and 2305 to provide call tones to call devices 2300 and 2306 respectively. Communication hub 2303 could also process confirmation messages confirming the call tones are being provided to call devices 2300 and 2306. Communication hub 2303 could also interface between communication network 2302 and second communication network 2304 to provide call tones generated by second communication network 2304 to one of call devices 2300 and 2306. Some examples of communication hub 2303 include without limitation, a network a voice gateway, a PBX, and a switch.

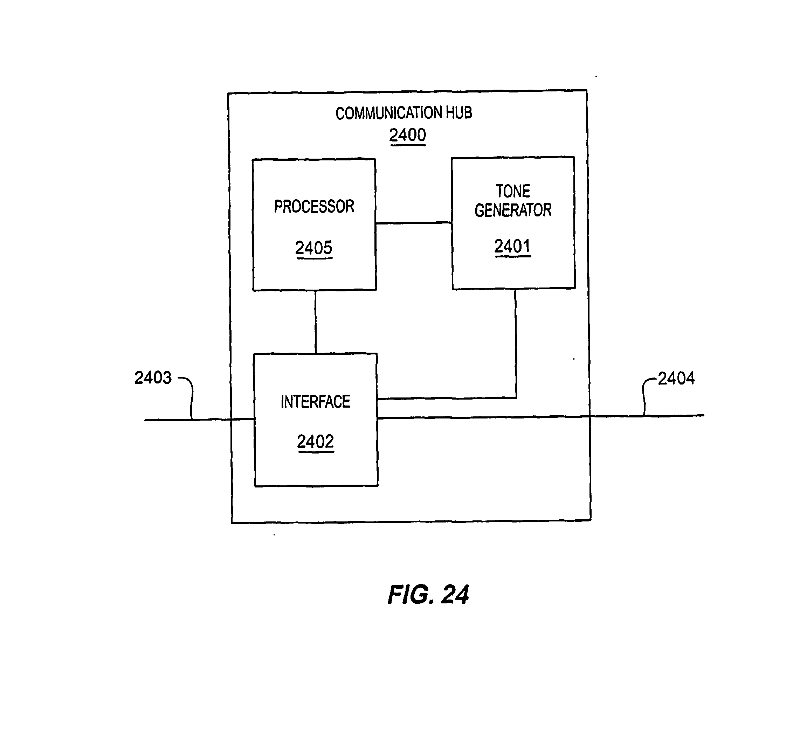

### The Communication Hub - FIG. 24

FIG. 24 depicts an example of communication hubs 2301, 2303, and 2305 according to the present invention, namely communication hub 2400. Those skilled in the art will appreciate numerous variations that do not depart from the present invention. Those skilled in the art will also appreciate that various features described below could be combined with the above described embodiment to form multiple variations of the invention.

Communication hub 2400 is comprised of a processor 2405, a tone generator 2401, and an interface 2402. Interface 2402 is connected to processor 2405, tone generator 2401, and communication paths 2403 and 2404. Communication paths 2403 and 2404 could be conventional communication paths. Processor 2405 is also connected to tone generator 2401. Those skilled in the art will appreciate that in some embodiments of the invention tone generator 2401 and interface 2402 could be a part of processor 2405, such as where tone generator 2401 and interface 2402 are in the same processing circuitry or included on the same chip as processor 2405. Those skilled in the art will also understand that communication hub 2400 typically would include other conventional components not shown on FIG. 24 for clarity, depending on the type of device and its operation in a network environment.

Processor 2405 could be any processor capable of processing various messages to: 1) direct tone generator 2401 to provide the call tones to a call device, 2) direct tone generator 2401 to stop providing the call tones to the call device, 3) provide confirmation that the call tones were provided to the call device, 4) generate in-band call tone request messages for other communication hubs; and 5) process confirmations from other communication hubs that call tones were provided to other call devices. Tone generator 2401 could be a conventional device that provides call tones under the control of processor 2405.

Interface 2402 could be any interface that receives messages for processor 2405 and transmits messages for processor 2405. Interface 2402 could also be a voice interface that acts as a POTS interface or packet interface, supervises messages, channels voice communications, or resolves contention between voice lines or voice communication paths. Interface 2402 could also be a data or video interface that manages data stream, video stream, performs asynchronous time division, or concentrates data and video lines or paths. One example of interface 2402 includes without limitation an asynchronous transfer mode (ATM) interface capable of handling ATM messaging for processor 2405 over communication path 2404 and capable of handling analog signaling for processor 2405 over communication path 2403. Interface 2402 could handle numerous such communication paths although only communication paths 2403 and 2404 are shown for clarity.

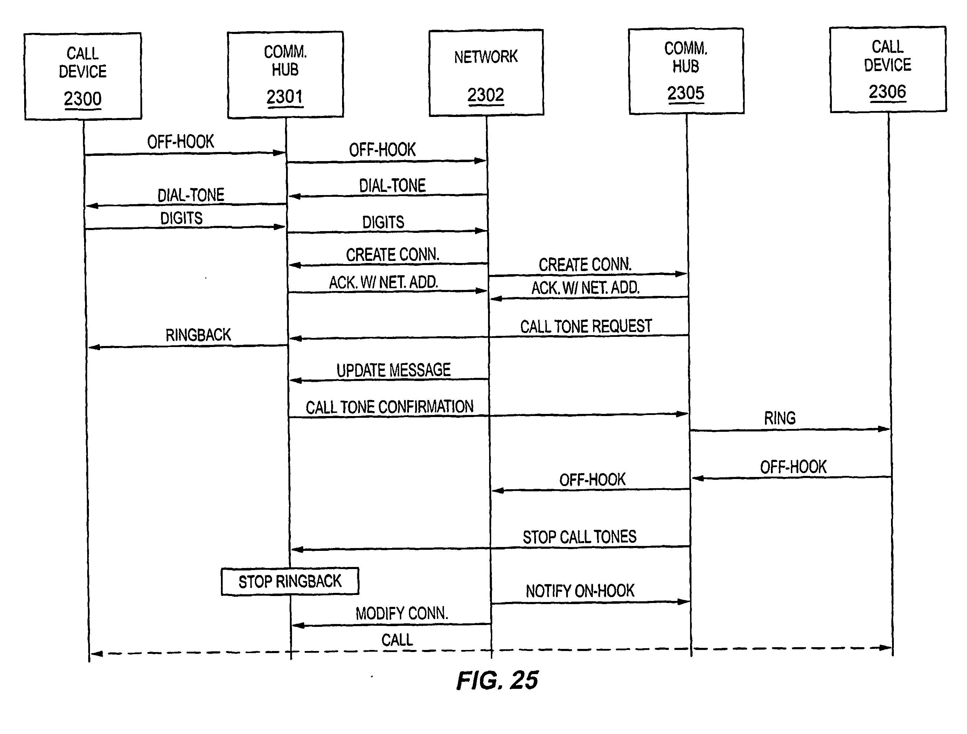

### Operation -- FIGS. 25-29

FIGS. 25-29 illustrate message sequence charts for various examples of the operation of a communication hub according to the present invention. It is anticipated, however, that various modifications to these examples will be readily apparent to those skilled in the art. The principles defined herein may also be applied to other embodiments without the use of inventive faculty. Thus, the present invention is not intended to be limited to the examples shown below but is to be accorded the widest scope consistent with the principles and novel features disclosed herein.

FIG. 25 is a message sequence chart illustrating an example according to the present invention of an on-network call session between communication hubs 2301 and 2305. In this example communication hub 2301 is the originating communication hub for the call and communication hub 2305 is the terminating communication hub for the call. On FIG. 25, call device 2300 goes off-hook and an off-hook event is detected in communication hub 2301. Communication hub 2301 provides an off-hook message to communication network 2302. Responsive to receiving the off-hook message, communication network 2302 provides a dial tone to call device 2300 via communication hub 2301. Caller entered digits are transmitted from call device 2300 to communication network 2302 via communication hub 2301. Responsive to receiving the digits, communication network 2302 provides a create connection message to communication hub 2301. The create connection message to communication hub 2301 creates a half duplex bearer connection between communication network 2302 and communication hub 2301. Responsive to the connection setup, communication hub 2301 provides an acknowledgment message to communication network 2302. The acknowledgment message includes the network address of communication hub 2301. Responsive to receiving the digits, communication network 2302 also provides a create connection message to communication hub 2305. The create connection message to communication hub 2305 creates a full duplex bearer connection between network 2302 and communication hub 2305. Responsive to the connection setup, communication hub 2305 provides an acknowledgment message to communication network 2302. The acknowledgment message includes the network address of communication hub 2305. The create connection message to communication hub 2305 includes the address of communication hub 2301 and includes an instruction for ring and ringback tones. Responsive to the ring and ringback instruction, communication hub 2305 provides an in-band call tone request message to communication hub 2301. The call tone request message includes a request for communication hub 2301 to provide ringback tones to call device 2300. In some examples of the present invention, the call tone request message could be triggered by the completion of the connection setup rather than the network instruction.

Responsive to receiving the call tone request message, communication hub 2301 provides the ringback tones to call device 2300. Substantially concurrently, communication network 2302 updates communication hub 2301 with the address of communication hub 2305. Responsive to the update message, communication hub 2301 provides an in-band call tone confirmation message to communication hub 2305. Alternatively, the call tone confirmation message could be provided over the signaling channel. The call tone confirmation message includes a confirmation that the ringback tones are being provided to call device 2300. Responsive to receiving the confirmation message, communication hub 2305 rings call device 2306 to announce the incoming call. In some examples of the invention, communication hub 2301 may not transmit the confirmation message to communication hub 2305. In this case communication hub 2305 rings call device 2306 responsive to the time-out of an internal timer.

Responsive to receiving an off-hook signal from call device 2306, communication hub 2305 provides an off-hook message to communication network 2302. Substantially concurrently, communication hub 2305 provides an in-band stop call tones message to communication hub 2301. Alternatively, the stop call tones message could be provided over the signaling channel. Responsive to receiving the stop call tones message, communication hub 2301 stops providing the ringback tones to call device 2300. Responsive to receiving the off-hook message, communication network 2302 sends a request for on-hook notification message to communication hub 2305 and modifies the connection between communication network 2302 and communication hub 2301 to a full duplex bearer connection to complete the call.

In some examples of the invention, communication hub 2305 starts a timer after sending the call tone request message to communication hub 2301. If communication hub 2301 does not respond before the timer times-out, communication hub 2305 provides an error message to communication network 2302 and the call is cleared. Similarly, communication network 2302 starts a timer while waiting for the off-hook message from communication hub 2305. If the timer times-out before the off-hook message is received, communication network 2302 could either perform call forwarding for subscribed customers or stop the call tones and clear the call.

In examples where the called party doesn't answer and the call is forwarded to another party, communication network 2302 sends an instruction to communication hub 2305 to stop ringing call device 2306. Communication network 2302 then forwards the call to another communication hub connected to the forwarded call device and the new communication hub exchanges the call tone request message, and in some examples, the confirmation message with communication hub 2301. In this case, communication hub 2301 recognizes the request is from the same calling party but for a different destination and continues providing the ringback tones.

In yet another example, where the called party doesn't answer and the call is forward to a voice response device, the communication hub 2305 could respond to the receipt of audio information to stop providing the ringback tones.

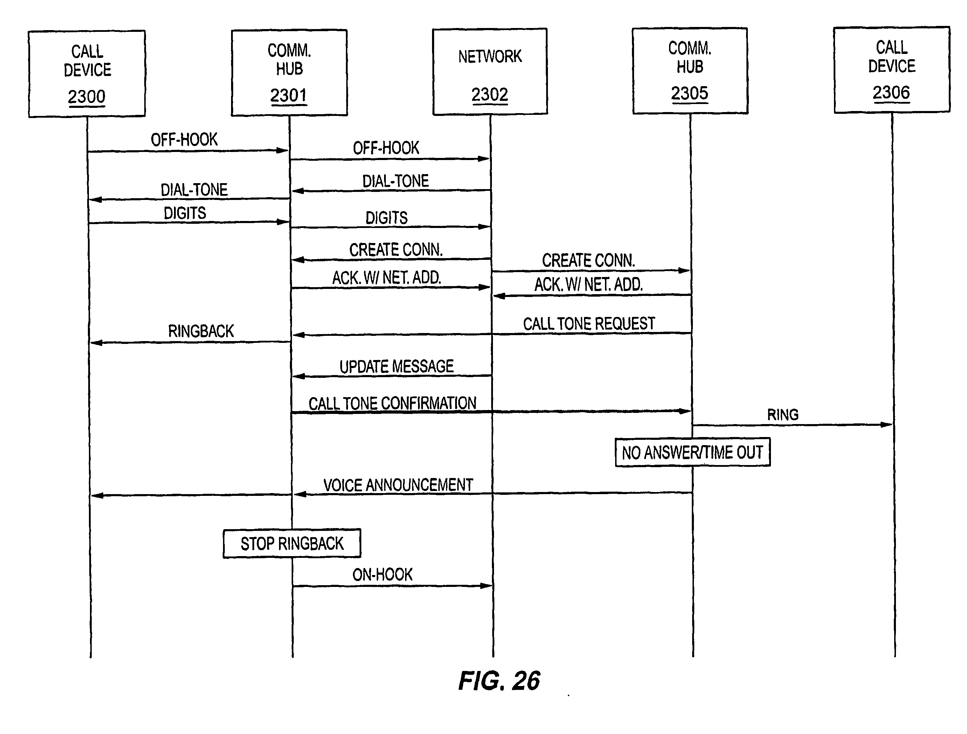

FIG. 26 illustrates a message sequence chart for an example, according to the present invention, of an on-network call session between communication hubs 2301 and 2305 where call device 2306 is not answered. In this example communication hub 2301 is the originating communication hub for the call and communication hub 2305 is the terminating communication hub for the call. On FIG. 26, call device 2300 goes off-hook and an off-hook event is detected in communication hub 2301. Communication hub 2301 provides an off-hook message to communication network 2302. Responsive to receiving the off-hook message, communication network 2302 provides a dial tone to call device 2300 via communication hub 2301. Caller entered digits are transmitted from call device 2300 to communication network 2302 via communication hub 2301. Responsive to receiving the digits, communication network 2302 provides a create connection message to communication hub 2301. The create connection message to communication hub 2301 creates a half duplex bearer connection between communication network 2302 and communication hub 2301. Responsive to the connection setup, communication hub 2301 provides an acknowledgment message to communication network 2302. The acknowledgment message includes the network address of communication hub 2301. Responsive to receiving the digits, communication network 2302 also provides a create connection message to communication hub 2305. The create connection message to communication hub 2305 creates a full duplex bearer connection between network 2302 and communication hub 2305. Responsive to the connection setup, communication hub 2305 provides an acknowledgment message to communication network 2302. The acknowledgment message includes the network address of communication hub 2305. The create connection message to communication hub 2305 includes the address of communication hub 2301 and includes an instruction for ring and ringback tones. Responsive to the ring and ringback instruction, communication hub 2305 provides an in-band call tone request message to communication hub 2301. The call tone request message includes a request for communication hub 2301 to provide ringback tones to call device 2300.

Responsive to receiving the call tone request message, communication hub 2301 provides the ringback tones to call device 2300. Substantially concurrently, communication network 2302 updates communication hub 2301 with the address of communication hub 2305. Responsive to the update message, communication hub 2301 provides an in-band call tone confirmation message to communication hub 2305. The call tone confirmation message includes a confirmation that the ringback tones are being provided to call device 2300. Responsive to receiving the confirmation message, communication hub 2305 rings call device 2306 to announce the incoming call. Communication hub 2305 also starts an internal timer. Responsive to the time-out of the internal timer, communication hub 2305 transmits an in-band voice announcement to communication hub 2301. The voice announcement indicates that the called party has not answered. Responsive to the voice announcement, communication hub 2301 stops playing the ringback tones and provides the voice announcement to the call device 2300. Responsive to detecting an on-hook event in call device 2300, communication hub 2301 provides an on-hook message to the communication network 2302. Responsive to the on-hook message, the communication network 2302 clears the call connections between the communication hubs 2301 and 2305 in a conventional manner to end the call session.

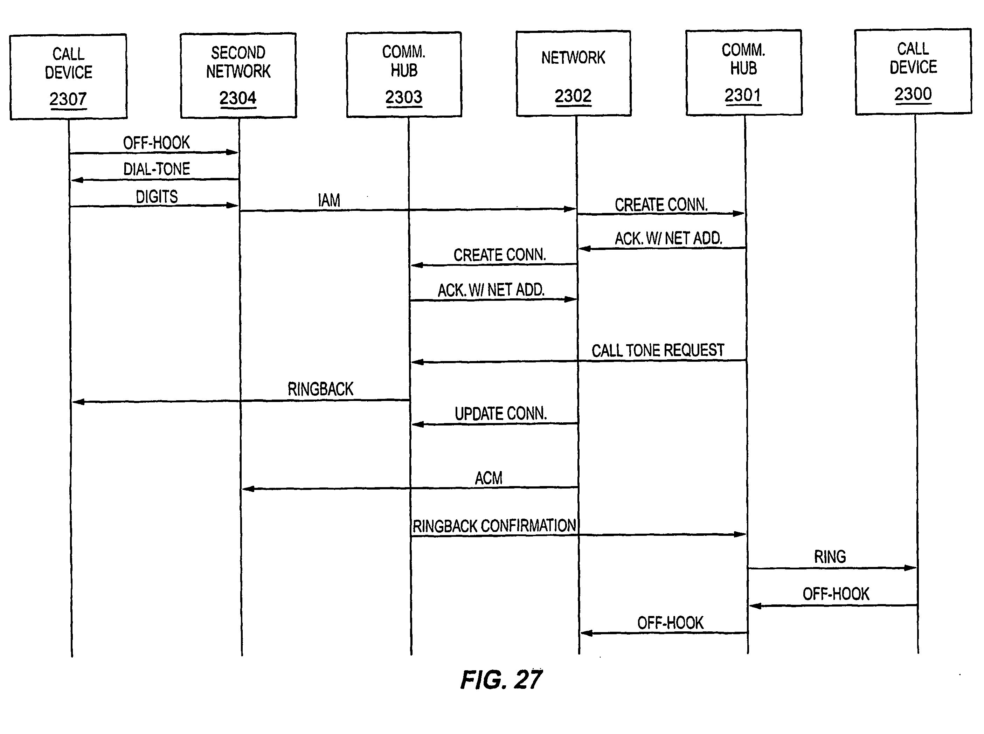

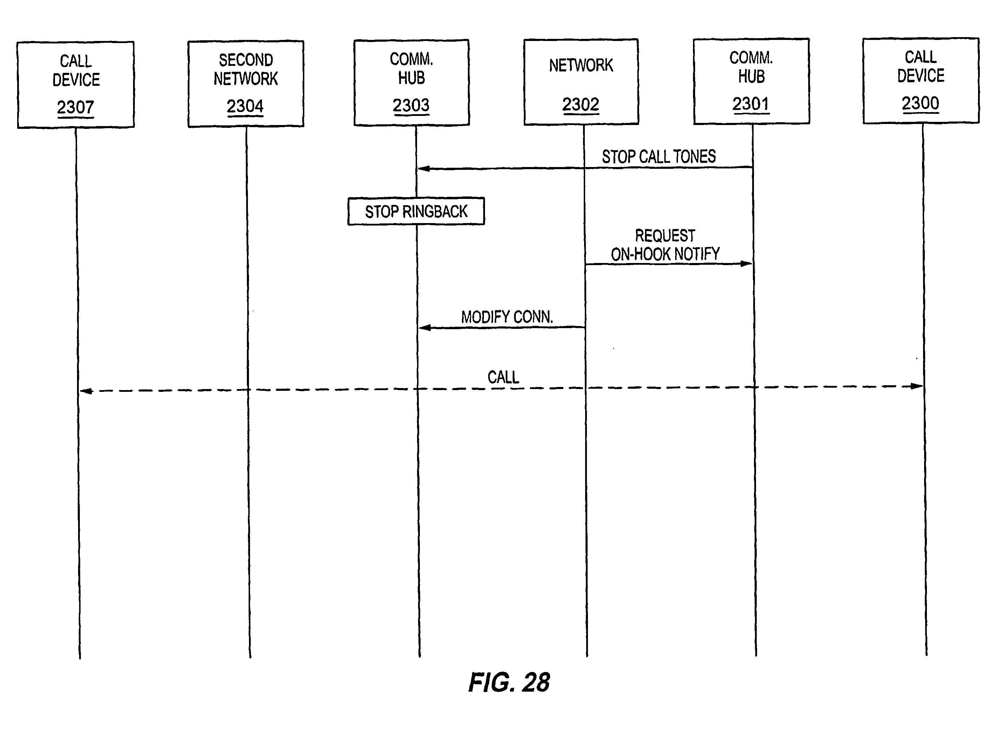

FIGS. 27 and 28 illustrate a message sequence chart for an example, according to the present invention, of an off-network to on-network call session. In this example, communication hub 2303 in communication network 2302 is the point proximate the calling device 2307 connected to second communication network 2304. On FIGS. 27 and 28, call device 2307 goes off-hook. Second communication network 2304 detects the off-hook event and provides a dial tone to call device 2307. Responsive to receipt of caller entered digits, second communication network 2304 provides an IAM message to communication network 2302 via communication hub 2303. Responsive to receiving the IAM message, communication network 2302 provides a create connection message to communication hub 2301. The create connection message to communication hub 2301 creates a full duplex bearer connection between communication network 2302 and communication hub 2301. Responsive to the connection setup, communication hub 2301 provides an acknowledgment message to communication network 2302. The acknowledgment message includes the network address of communication hub 2301. Responsive to the IAM message, communication network 2302 also provides a create connection message to communication hub 2303. The create connection message to communication hub 2303 creates a half duplex bearer connection between network 2302 and communication hub 2303. Responsive to the connection setup, communication hub 2303 provides an acknowledgment message to communication network 2302. The acknowledgment message includes the network address of communication hub 2303. The create connection message to communication hub 2301 includes the network address of communication hub 2303 and includes the ring and ringback instruction. Responsive to the ring and ringback instruction, communication hub 2301 provides an in-band call tone request message to communication hub 2303. The call tone request message includes a request for communication hub 2303 to provide ringback tones to call device 2307. It should be noted that in some examples of the present invention, the call tone request message could be triggered by the completion of the connection setup

Responsive to receiving the call tone request message, communication hub 2303 provides ringback tones to call device 2307. Substantially concurrently, network 2302 updates communication hub 2303 with the address of communication hub 2301 and provides an ACM message to second communication network 2304. Responsive to providing the ringback tones to call device 2307, communication hub 2303 provides a confirmation message to communication hub 2301 that includes a confirmation that the ringback tones are being provided to call device 2307. Responsive to receiving the confirmation message, communication hub 2301 rings call device 2300 to announce the incoming call. In some examples of the invention, communication hub 2303 may not transmit the confirmation message to communication hub 2301. In this case communication hub 2301 would ring call device 2300 responsive to the time-out of an internal timer.

Responsive to receiving an off-hook signal from call device 2300, communication hub 2301 provides an off-hook message to network 2302. Substantially concurrently communication hub 2301 provides a stop call tones message to communication hub 2303. Communication hub 2303, responsive to receiving the stop call tones message, stops providing the ringback tones to call device 2307. Communication network 2302 sends a request for on-hook notification message to communication hub 2301 and modifies the connection between communication network 2302 and communication hub 2303 to a full duplex bearer connection to complete the call.

In some examples of the invention, communication hub 2301 starts a timer after sending the call tone request message to communication hub 2303. If communication hub 2303 does not respond before the timer times-out, communication hub 2301 provides an error message to network 2302 and the call is cleared. Similarly, network 2302 starts a timer while waiting for the off-hook message from communication hub 2301. If the timer times-out before the off-hook message is received, network 2302 could either perform call forwarding for subscribed customers or stop the ringback tones and clear the call.

In examples where the called party doesn't answer and the call is forwarded to another party, network 2302 sends a instruction to communication hub 2303 to stop ringing call device 2300 and clears the connection. Communication network 2302 could forward the call to another communication hub connected to the forwarded call device or use the same communication hub to establish a connection with a new call device. In either case, communication hub 2301 recognizes the request is from the same calling party but for a different destination and continues transmission of the ringback tones.

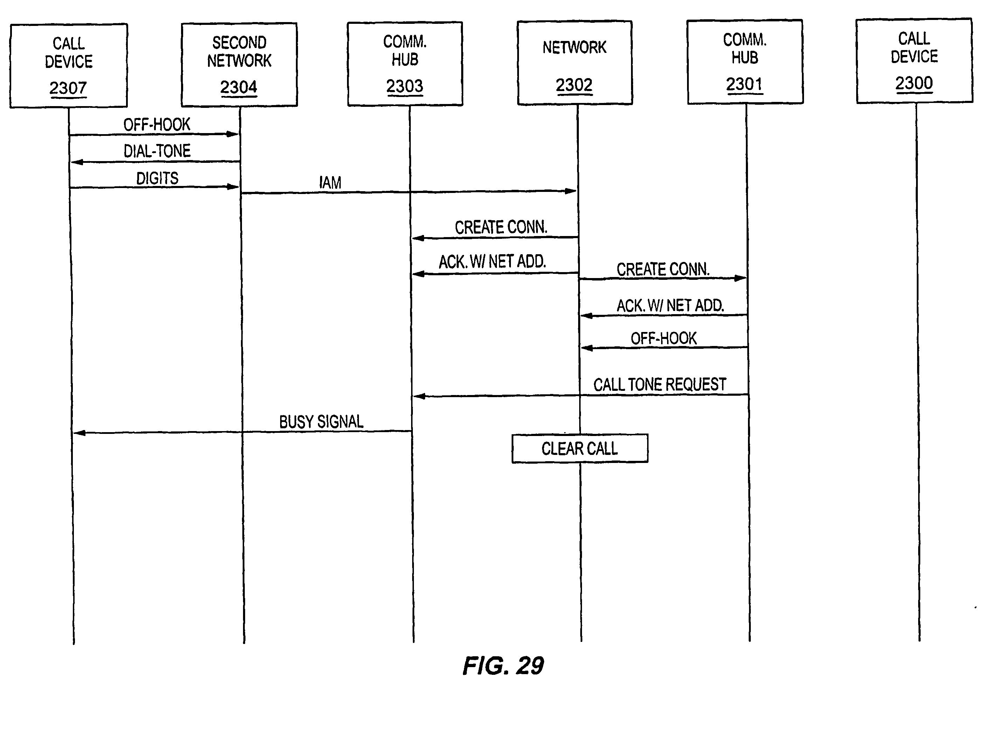

FIG. 29 illustrates a message sequence chart for an example, according to the present invention, of an off-network to on-network call session where the called device 2300 is busy. On FIG. 29, call device 2307 goes off-hook. Second communication network 2304 detects the off-hook event and provides a dial tone to call device 2307. Responsive to receipt of caller entered digits, second communication network 2304 provides an IAM message to communication network 2302 via communication hub 2303. Responsive to receiving the IAM message, communication network 2302 provides a create connection message to communication hub 2301. The create connection message to communication hub 2301 creates a full duplex bearer connection between communication network 2302 and communication hub 2301. Responsive to the connection setup, communication hub 2301 provides an acknowledgment message to communication network 2302. The acknowledgment message includes the network address of communication hub 2301. Responsive to the IAM message, communication network 2302 also provides a create connection message to communication hub 2303. The create connection message to communication hub 2303 creates a half duplex bearer connection between network 2302 and communication hub 2303. Responsive to the connection setup, communication hub 2303 provides an acknowledgment message to communication network 2302. The acknowledgment message includes the network address of communication hub 2303. The create connection message to communication hub 2301 includes the address of communication hub 2303 and includes an instruction for ring and ringback tones. Responsive to the ring and ringback instruction, communication hub 2301 detects that call device 2300 is already off-hook or busy and provides an off-hook message to communication network 2302. Substantially concurrently, communication hub 2301 provides an in-band call tone request message to communication hub 2303. The call tone request message includes a request for communication hub 2303 to provide busy signal tones to call device 2307. Responsive to receiving the request, communication hub 2303 provides busy signal tones to call device 2307. Network 2302, responsive to receiving the off-hook message, clears the call. Advantageously, the bandwidth required for call completion is significantly reduced because call tones are provided proximate the calling device 2307.

Those skilled in the art will appreciate that during an emergency 911 calling scenario, such as an attendant call back scenario where the caller is still in an off-hook state, some special treatment is required. For example, a receiver off-hook signal could be sent to the caller who is off-hook. During this time, audible ringing could be returned to the attendant. After a pre-determined time the connections would be modified to allow the attendant to cut through the audio path.

The above-described elements can be comprised of instructions that are stored on storage media. The instructions can be retrieved and executed by a processor. Some examples of instructions are software, program code, and firmware. Some examples of storage media are memory devices, tape, disks, integrated circuits, and servers. The instructions are operational when executed by the processor to direct the processor to operate in accord with the invention. The term "processor" refers to a single processing device or a group of inter-operational processing devices. Some examples of processors are integrated circuits and logic circuitry. Those skilled in the art are familiar with instructions, processors, and storage media.

Those skilled in the art will appreciate variations of the above described embodiments that fall within the scope of the invention. As a result, the invention is not limited to the specific examples and illustrations discussed above, but only by the following claims and their equivalents.

## Claims

1. A communication system (310) configured to test for continuity on a channel of a packet communication network, the communication system comprising a first communication hub (301) connected to the packet communication network (302) and a second communication hub (305) connected to the packet communication network (302), wherein the communication system is configured to connect a call between the first communication hub and the second communication hub over the packet communication network, wherein the packet communication network (302) is configured to generate and transmit a continuity test instruction to the second communication hub (305), the communication system (310) **characterized by**:
the second communication hub (305) being configured to process the continuity test instruction and a network address of the first communication hub (301) to generate a request for continuity acknowledgment message, and transmit the request for continuity acknowledgment message to the first communication hub (301) over the channel of the packet communication network (302);
the first communication hub (301) being configured to receive the request for continuity acknowledgment message over the packet communication network (302), to process the request for continuity acknowledgment message and a network address of the second communication hub (305) to generate a continuity acknowledgment message, and to transmit the continuity acknowledgment message to the second communication hub (305) over the channel of the packet communication network (302); and
the second communication hub (305) being configured to process the continuity acknowledgment message to generate a continuity confirmation message identifying continuity on the channel of the packet communication network (302), transmit the continuity confirmation message to the packet communication network (302), process a continuity test tone instruction to generate continuity test tones and provide the continuity test tones over a bearer channel of a communication network (304) that is connected to the second communication hub (305), and receive the continuity test tones over the bearer channel of the communication network (304) and process the continuity test tones to provide a continuity test tone confirmation message to the packet communication network (302) that includes a confirmation that the continuity test tones were received back from the communication network (304).

2. The communication system (310) of claim 1 wherein the packet communication network (302) is configured to process the continuity confirmation message to generate a control message to continue setup of the call.

3. The communication system (310) of claim 2 wherein the control message comprises an initial address message.

4. The communication system (310) of claim 1 wherein:
the second communication hub (305) is further configured to process the continuity test tone instruction to generate a call tone request message and provide the call tone request message to the first communication hub (301) over the packet communication network (302); and
the first communication hub (301) is further configured to process the call tone request message to provide call tones to a first call device (300) connected to the first communication hub (301).

5. The communication system (310) of claim 4 wherein:
the second communication hub (305) is further configured to provide a stop call tones message to the first communication hub (301) over the packet communication network (302) responsive to receiving an off-hook signal from a second call device connected to the second communication hub (305); and
the first communication hub (301) is further configured to process the stop call tones message to stop providing the call tones to the first call device (300).

6. The communication system (310) of claim 1 wherein the communication network (304) comprises a public switched telephone network.

7. The communication system (310) of claim 1 wherein the network addresses comprise Internet Protocol (IP) addresses.

8. The communication system (310) of claim 1 wherein at least one of the first communication hub (301) and the second communication hub (305) comprises a switch.

9. The communication system (310) of claim 1 wherein at least one of the first communication hub (301) and the second communication hub (305) comprises a residential communication hub.

10. A method of operating a communication system (310) to test continuity on a channel of a packet communication network (302), wherein the communication system comprises a first communication hub (301), a second communication hub (305), and the packet communication network (302), wherein the communication system (310) is configured to connect a call between the first communication hub (301) and the second communication hub (305) over the packet communication network (302), wherein the packet communication network (302) generates and transmits a continuity test instruction to the second communication hub (305), the method **characterized by** the steps of:
in the second communication hub (305), processing the continuity test instruction and a network address of the first communication hub (301) to generate a request for continuity acknowledgment message and transmitting the request for continuity acknowledgment message to the first communication hub (301) over the channel of the packet communication network (302);
in the first communication hub (301), receiving the request for continuity acknowledgment message over the channel of the packet communication network (302), processing the request for continuity acknowledgment message and a network address of the second communication hub (305) to generate a continuity acknowledgment message, and transmitting the continuity acknowledgement message to the second communication hub (305) over the channel of the packet communication network (302); and
in the second communication hub (305) processing the continuity acknowledgment message to generate a continuity confirmation message identifying continuity of the channel of the packet communication network, and transmitting the continuity confirmation message to the packet communication network (302), processing a continuity test tone instruction to generate continuity test tones and providing the continuity test tones over a bearer channel of a communication network (304) that is connected to the second communication hub (305), receiving the continuity test tones over the bearer channel of the communication network (304), processing the continuity test tones to generate a continuity test tone confirmation message that includes a confirmation that the continuity test tones were received back from the communication network (304), and transmitting the continuity test tone confirmation message to the packet communication network (302).

11. The method of claim 10 further comprising:
in the packet communication network (302), processing the continuity confirmation message to generate a control message to continue set up of the call.

12. The method of claim 11 wherein the control message comprises an initial address message.

13. The method of claim 10 further **characterized by**:
in the second communication hub (305), processing the continuity test tone instruction to generate a call tone request message and transmitting the call tone request message to the first communication hub (301) over the packet communication network (302); and
in the first communication hub (301), processing the call tone request message to provide call tones to a first call device (300) connected to the first communication hub (301).

14. The method of claim 13 further **characterized by**:
in the second communication hub (305), transmitting a stop call tones message to the first communication hub (301) over the packet communication network (302) responsive to receiving an off-hook signal from a second call device connected to the second communication hub (305); and
in the first communication hub (301), processing the stop call tones message to stop providing the call tones to the first call device (300).

15. The method of claim 10 wherein the communication network (304) comprises a public switched telephone network.

16. The method of claim 10 wherein the network addresses comprise Internet Protocol (IP) addresses.

17. The method of claim 10 wherein at least one of the first communication hub (301) and the second communication hub (305) comprises a switch.

18. The method of claim 10 wherein at least one of the first communication hub (301) and the second communication hub (305) comprises a residential communication hub.

## Patentansprüche

1. Kommunikationssystem (310), das so ausgeführt ist, dass es in einem Kanal eines Paket-Kommunikations-Netzwerks auf Durchgang prüft, wobei das Kommunikationssystem einen ersten Kommunikations-Hub (301), der mit dem Paket-Kommunikations-Netzwerk (302) verbunden ist, und einen zweiten Kommunikations-Hub (305) umfasst, der mit dem Paket-Kommunikations-Netzwerk (302) verbunden ist, das Kommunikationssystem so konfiguriert ist, dass es eine Verbindung zwischen dem ersten Kommunikations-Hub und dem zweiten Kommunikations-Hub über das Paket-Kommunikations-Netzwerk herstellt, das Paket-Kommunikations-Netzwerk (302) so konfiguriert ist, dass es einen Durchgangsprüfbefehl erzeugt und zu dem zweiten Kommunikations-Hub (305) sendet, und das Kommunikationssystem (310) **dadurch gekennzeichnet ist, dass**:
der zweite Kommunikations-Hub (305) so konfiguriert ist, dass er den Durchgangsprüf-Befehl und eine Netzwerkadresse des ersten Kommunikations-Hubs (301) verarbeitet, um eine Anforderung einer Durchgangs-Quittierungsnachricht zu erzeugen, und die Anforderung einer Durchgangs-Quittierungsnachricht über den Kanal des Paket-Kommunikations-Netzwerkes (302) zu dem ersten Kommunikations-Hub (301) sendet;
der erste Kommunikations-Hub (301) so ausgeführt ist, dass er die Anforderung einer Durchgangs-Quittierungsnachricht über das Paket-Kommunikations-Netzwerk (302) empfängt, die Anforderung einer Durchgangs-Quittierungsnachricht und eine Netzwerk-Adresse des zweiten Kommunikations-Hubs (305) verarbeitet, um eine Durchgangs-Quittierungsnachricht zu erzeugen, und die Durchgangs-Quittierungsnachricht über den Kanal des Paket-Kommunikations-Netzwerks (302) zu dem zweiten Kommunikations-Hub (305) sendet; und
der zweite Kommunikations-Hub (305) so konfiguriert ist, dass er die Durchgangs-Quittierungsnachricht verarbeitet, um eine Durchgangs-Bestätigungsnachricht zu erzeugen, die Durchgang in dem Kanal des Paket-Kommunikations-Netzwerkes (302) angibt, die Durchgangs-Bestätigungsnachricht zu dem Paket-Kommunikations-Netzwerk (302) sendet, einen Durchgangsprüfton-Befehl verarbeitet, um Durchgangsprüftöne zu erzeugen und die Durchgangsprüftöne über einen Signalkanal eines Kommunikations-Netzwerkes (304) bereitzustellen, das mit dem zweiten Kommunikations-Hub (305) verbunden ist, und die Durchgangsprüftöne über den Signalkanal des Kommunikations-Netzwerks (304) empfängt und die Durchgangsprüftöne verarbeitet, um eine Durchgangsprüfton-Bestätigungsnachricht zu dem Paket-Kommunikations-Netzwerk (302) zu senden, die eine Bestätigung enthält, dass die Durchgangsprüftöne von dem Kommunikations-Netzwerk (304) zurück empfangen wurden.

2. Kommunikations-System (310) nach Anspruch 1, wobei das Paket-Kommunikations-Netzwerk (302) so konfiguriert ist, dass es die Durchgangs-Bestätigungsnachricht verarbeitet, um eine Steuernachricht zum Fortsetzen des Verbindungsaufbaus zu erzeugen.

3. Kommunikations-System (310) nach Anspruch 2, wobei die Steuernachricht eine Anfangsadressen-Nachricht umfasst.

4. Kommunikations-System (310) nach Anspruch 1, wobei:
der zweite Kommunikations-Hub (305) des Weiteren so konfiguriert ist, dass er den Durchgangsprüfton-Befehl verarbeitet, um eine Rufton-Anforderungsnachricht zu erzeugen und die Rufton-Anforderungsnachricht über das Paket-Kommunikations-Netzwerk (302) dem ersten Kommunikations-Hub (301) bereitzustellen; und
der erste Kommunikations-Hub (301) des Weiteren so konfiguriert ist, dass er die Rufton-Anforderungsnachricht verarbeitet, um einer ersten Rufvorrichtung (300) die mit dem ersten Kommunikations-Hub (301) verbunden ist, Ruftöne bereitzustellen.

5. Kommunikations-System (310) nach Anspruch 4, wobei:
der zweite Kommunikations-Hub (305) des Weiteren so konfiguriert ist, dass er in Reaktion auf den Empfang eines Antwortsignals von einer zweiten Rufvorrichtung, die mit dem zweiten Kommunikations-Hub (305) verbunden ist, dem ersten Kommunikations-Hub (301) über das Paket-Kommunikations-Netzwerk (302) eine Nachricht zum Unterbrechen von Ruftönen bereitstellt; und
der erste Kommunikations-Hub (301) des Weiteren so konfiguriert ist, dass er die Nachricht zum Unterbrechen von Ruftönen verarbeitet, um das Bereitstellen der Ruftöne für die erste Rufvorrichtung (300) zu unterbrechen.

6. Kommunikations-System (310) nach Anspruch 1, wobei das Kommunikations-Netzwerk (304) ein öffentliches Telefonnetz umfasst.

7. Kommunikations-System (310) nach Anspruch 1, wobei die Netzwerk-Adressen Internet-Protokoll (IP)-Adressen umfassen.

8. Kommunikations-System (310) nach Anspruch 1, wobei wenigstens der erste Kommunikations-Hub (301) oder der zweite Kommunikations-Hub (305) einen Switch umfasst.

9. Kommunikations-System (310) nach Anspruch 1, wobei wenigstens der erste Kommunikations-Hub (301) oder der zweite Kommunikations-Hub (305) einen privaten Kommunikations-Hub umfasst.

10. Verfahren zum Betreiben eines Kommunikations-Systems (310), um in einem Kanal eines Paket-Kommunikations-Netzwerkes (302) auf Durchgang zu prüfen, wobei das Kommunikations-System einen ersten Kommunikations-Hub (301), einen zweiten Kommunikations-Hub (305) und das Paket-Kommunikations-Netzwerk (302) umfasst, das Kommunikations-System (310) so konfiguriert ist, dass es eine Verbindung zwischen dem ersten Kommunikations-Hub (301) und dem zweiten Kommunikations-Hub (305) über das Paket-Kommunikations-Netzwerk (302) herstellt, das Paket-Kommunikations-Netzwerk (302) einen Durchgangsprüf-Befehl erzeugt und zu dem zweiten Kommunikations-Hub (305) sendet, und das Verfahren durch die folgenden Schritte **gekennzeichnet ist**:
in dem zweiten Kommunikations-Hub (305) Verarbeiten des Durchgangsprüf-Befehls und einer Netzwerk-Adresse des ersten Kommunikations-Hubs (301), um eine Anforderung nach einer Durchgangs-Quittierungsnachricht zu erzeugen, und Senden der Anforderung einer Durchgangs-Quittierungsnachricht über den Kanal des Paket-Kommunikations-Netzwerks (302) zu dem ersten Kommunikations-Hub (301);
in dem ersten Kommunikations-Hub Empfangen der Anforderung einer Durchgangs-Quittierungsnachricht über den Kanal des Paket-Kommunikations-Netzwerks (302), Verarbeiten der Anforderung einer Durchgangs-Quittierungs-nachricht und einer Adresse des zweiten Kommunikations-Hubs (305), um eine Durchgangs-Quittierungsnachricht zu erzeugen, und Senden der Durchgangs-Quittierungsnachricht zu dem zweiten Kommunikations-Hub (305) über den Kanal des Paket-Kommunikations-Netzwerks (302); und
in dem zweiten Kommunikations-Hub (305) Verarbeiten der Durchgangs-Quittierungsnachricht, um eine Durchgangs-Bestätigungsnachricht zu erzeugen, die Durchgang des Kanals in dem des Paket-Kommunikations-Netzwerkes angibt, und Senden der Durchgangs-Bestätigungsnachricht zu dem Paket-Kommunikations-Netzwerk (302), Verarbeiten eines Durchgangsprüfton-Befehls, um Durchgangsprüftöne zu erzeugen und die Durchgangsprüftöne über einen Signalkanal eines Kommunikations-Netzwerks (304) bereitzustellen, das mit dem zweiten Kommunikations-Hub (305) verbunden ist, Empfangen der Durchgangsprüftöne über den Signalkanal des Kommunikations-Netzwerks (304), Verarbeiten der Durchgangsprüftöne, um eine Durchgangsprüfton-Bestätigungsnachricht zu erzeugen, die eine Bestätigung enthält, dass die Durchgangsprüftöne von dem Kommunikations-Netzwerk (304) zurück empfangen wurden, und Senden der Durchgangsprüfton-Bestätigungsnachricht zu dem Paket-Kommunikations-Netzwerk (302).

11. Verfahren nach Anspruch 10, das des Weiteren umfasst:
in dem Paket-Kommunikations-Netzwerk (302) Verarbeiten der Durchgangs-Bestätigungsnachricht, um eine Steuernachricht zum Fortsetzen des Verbindungsaufbaus zu erzeugen.

12. Verfahren nach Anspruch 11, wobei die Steuernachricht eine Anfangsadressen-Nachricht umfasst.

13. Verfahren nach Anspruch 10, des Weiteren **gekennzeichnet durch**:
in dem zweiten Kommunikations-Hub (305) Verarbeiten des Durchgangsprüfton-Befehls, um eine Rufton-Anforderungsnachricht zu erzeugen, und Senden der Rufton-Anforderungsnachricht über das Paket-Kommunikations-Netzwerk (302) zu dem ersten Kommunikations-Hub (301); und
in dem ersten Kommunikations-Hub (301) Verarbeiten der Rufton-Anforderungsnachricht, um einer ersten Rufvorrichtung (300), die mit dem ersten Kommunikations-Hub (301) verbunden ist, Ruftöne bereitzustellen.

14. Verfahren nach Anspruch 13, des Weiteren **gekennzeichnet durch:**
in dem zweiten Kommunikations-Hub (305) in Reaktion auf das Empfangen eines Antwort-Signals von einer zweiten Rufvorrichtung, die mit dem zweiten Kommunikations-Hub (305) verbunden ist, Senden einer Nachricht zum Unterbrechen von Ruftönen zu dem ersten Kommunikations-Hub (301) über das Paket-Kommunikations-Netzwerk (302); und
in dem ersten Kommunikations-Hub (301) Verarbeiten der Nachricht zum Unterbrechen von Ruftönen, um das Bereitstellen der Ruftöne für die erste Rufvorrichtung (300) zu unterbrechen.

15. Verfahren nach Anspruch 10, wobei das Kommunikations-Netzwerk (304) ein öffentliches Telefonnetz umfasst.

16. Verfahren nach Anspruch 10, wobei die Netzwerk-Adressen Internet-Protokoll (IP)-Adressen umfassen.

17. Verfahren nach Anspruch 10, wobei wenigstens der erste Kommunikations-Hub (301) oder der zweite Kommunikations-Hub (305) einen Switch umfasst.

18. Verfahren nach Anspruch 10, wobei wenigstens der erste Kommunikations-Hub (301) oder der zweite Kommunikations-Hub (305) einen privaten Kommunikations-Hub umfasst.

## Revendications

1. Système de communication (310) configuré de manière à tester la continuité dans un canal d'un réseau de communication par paquets, le système de communication comprenant un premier concentrateur de communication (301) connecté au réseau de communication par paquets (302) et un second concentrateur de communication (305) connecté au réseau de transmission par paquets (302), le système de communication étant configuré de manière à connecter un appel entre le premier concentrateur de communication et le second concentrateur de communication par l'intermédiaire du réseau de communication par paquets, le réseau de communication par paquets (302) étant configuré de manière à générer et transmettre une instruction de test de continuité au second concentrateur de communication (305), le système de communication (310) étant **caractérisé par le fait que** :
le second concentrateur de communication (305) est configuré de manière à traiter l'instruction de test de continuité et une adresse de réseau du premier concentrateur de communication (301) pour générer une demande de message d'accusé de réception de continuité, et transmettre la demande de message d'accusé de réception de continuité au premier concentrateur de communication (301) par l'intermédiaire du canal du réseau de communication par paquets (302);
le premier concentrateur de communication (301) est configuré de manière à recevoir la demande d'un message d'accusé de réception de continuité par l'intermédiaire du réseau de transmission par paquets (302), traiter la demande de message d'accusé de réception de continuité et une adresse de réseau du second concentrateur de communication (305) pour générer un message d'accusé de réception de continuité, et transmettre le message d'accusé de réception de continuité au second concentrateur de communication (305) par l'intermédiaire du canal du réseau de communication par paquets (302); et
le second concentrateur de communication (305) est configuré de manière à traiter le message d'accusé de réception de continuité pour générer un message de confirmation de continuité identifiant la continuité dans le canal du réseau de communication par paquets (302), transmettre le message de confirmation de continuité au réseau de communication par paquets (302), traiter une instruction de délivrance de tonalités de test de continuité pour générer des tonalités de test de continuité et envoyer les tonalités de test de continuité par l'intermédiaire d'un canal porteur d'un réseau de communication (304) qui est connecté au second concentrateur de communication (305), et recevoir les tonalités de test de continuité par l'intermédiaire du canal porteur du réseau de communication (304) et traiter les tonalités de test de continuité pour envoyer un message de confirmation de délivrance de tonalités de test de continuité au réseau de communication par paquets (302) qui inclut une confirmation du fait que les tonalités de test de continuité ont été reçues en retour à partir du réseau de communication (304).

2. Système de communication (310) selon la revendication 1, dans lequel le réseau de communication par paquets (302) est configuré de manière à traiter le message de confirmation de continuité pour générer un message de commande pour continuer l'établissement de l'appel.

3. Système de communication (310) selon la revendication 2, dans lequel le message de commande comprend un message d'adresse initial.

4. Système de communication (310) selon la revendication 1, dans lequel :
le second concentrateur de communication (305) est en outre configuré de manière à traiter l'instruction de tonalité de test de continuité pour générer un message de demande de tonalité d'appel et envoyer le message de demandes de tonalités d'appel au premier concentrateur de communication (301) par l'intermédiaire du réseau de transmission par paquets (302); et
le premier concentrateur de communication (301) est en outre configuré de manière à traiter le message de demande de tonalités d'appel pour envoyer les tonalités d'appel à un premier dispositif d'appel (300) connecté au premier concentrateur de communication (301).

5. Système de communication (310) selon la revendication 4, dans lequel :
le second concentrateur de communication (305) est en outre configuré de manière à envoyer un message d'arrêt de délivrance de tonalités d'appel au premier concentrateur de communication (301) par l'intermédiaire du réseau de communication par paquets (301) en réponse à la réception d'un signal de décrochage en provenance d'un second dispositif d'appel connecté au second concentrateur de communication (305); et
le premier concentrateur de communication (301) est configuré de manière à traiter le message d'arrêt de délivrance de tonalités d'appels pour arrêter la délivrance des tonalités d'appel au premier dispositif d'appel (300).

6. Système de communication (310) selon la revendication 1, dans lequel le réseau de communication (304) comprend un réseau téléphonique commuté public.

7. Système de communication (310) selon la revendication 1, dans lequel les adresses du réseau comprennent des adresses de protocole Internet (IP).

8. Système de communication (310) selon la revendication 1, dans lequel au moins l'un du premier concentrateur de communication (301) et du second concentrateur de communication (305) comprend un commutateur.

9. Système de communication (310) selon la revendication 1, dans lequel au moins l'un du premier concentrateur de communication (301) et du second concentrateur de communication (305) comprend un concentrateur de communication résidentiel.

10. Procédé pour faire fonctionner un système de communication (310) afin de tester la continuité dans un canal d'un réseau de communication par paquets (302), selon lequel le système de communication comprend un premier concentrateur de communication (301), un second concentrateur de communication (305) et le réseau de communication par paquets (302), et selon lequel le système de communication (310) est configuré de manière à connecter un appel entre le premier concentrateur de communication (301) et le second concentrateur de communication (305) dans le réseau de communication par paquets (302), et selon lequel le réseau de communication par paquets (312) génère une instruction de test de continuité et le transmet au second concentrateur de communication (305), le procédé étant **caractérisé par** les étapes consistant à :
dans le second concentrateur de communication (305), traiter l'instruction de test de continuité et une adresse de réseau du premier concentrateur de communication (301) pour générer une demande de message d'accusé de réception de continuité, et transmettre la demande de message d'accusé de réception de continuité au premier concentrateur de communication (301) par l'intermédiaire du canal du réseau de communication par paquets (302);
dans le premier concentrateur de communication (301), recevoir la demande d'un message d'accusé de réception de continuité par l'intermédiaire du réseau de transmission par paquets (302), traiter la demande du message d'accusé de réception de continuité et une adresse de réseau du second concentrateur de communication (305) pour générer un message d'accusé de réception de continuité, et transmettre le message d'accusé de réception de continuité au second concentrateur de communication (305) par l'intermédiaire du canal du réseau de communication par paquets (302); et
dans le second concentrateur de communication (305), traiter le message d'accusé de réception de continuité pour générer un message de confirmation de continuité identifiant la continuité dans le canal du réseau de communication par paquets (302), envoyer le message de confirmation de continuité au réseau de communication par paquets (302), traiter une instruction de tonalité de test de continuité pour générer des tonalités de test de continuité et délivrer les tonalités de test de continuité par l'intermédiaire d'un canal porteur d'un réseau de communication (304) qui est connecté au second concentrateur de communication (305), recevoir les tonalités de test de continuité par l'intermédiaire du canal porteur du réseau de communication (304), traiter les tonalités de test de continuité pour générer un message de confirmation de délivrance de tonalités de test de continuité, qui inclut une confirmation une confirmation du fait que les tonalités de test de continuité ont été reçues en retour en provenance du réseau de communication (304), et transmettre le message de confirmation de tonalités de test de continuité au réseau de communication par paquets (302).

11. Procédé selon la revendication 10, comprenant en outre :
dans le réseau de communication par paquets (302), le traitement du message de confirmation de continuité pour générer un message de commande pour continuer l'établissement de l'appel.

12. Procédé selon la revendication 11, selon lequel le message de commande comprend un message d'adresse initial.

13. Procédé selon la revendication 10, **caractérisé en outre par** :
dans le second concentrateur de communication (305), le traitement de l'instruction de délivrance de tonalité de test de continuité pour générer un message de demande de tonalités d'appel et transmettre le message de demandes de tonalités d'appel au premier concentrateur de communication (301) par l'intermédiaire du réseau de communication par paquets (302); et
dans le premier concentrateur de communication (301), traiter le message de demandes de tonalités d'appel pour délivrer des tonalités d'appel à un premier dispositif d'appel (300) connecté au premier concentrateur de communication (301).

14. Procédé selon la revendication 13, **caractérisé en outre par** :
dans le second concentrateur de communication (305), transmettre un message d'arrêt de production de tonalités d'appel au premier concentrateur de communication (301) par l'intermédiaire du réseau de communication par paquets (302) en réponse à la réception d'un signal de décrochage provenant d'un second dispositif d'appel connecté au second concentrateur de communication (305), et
dans le premier concentrateur de communication (301), le traitement du message d'arrêt de production de tonalités d'appel pour arrêter la délivrance des tonalités d'appel au premier dispositif d'appel (300).

15. Procédé selon la revendication 10, selon lequel le réseau de communication (304) comprend un réseau téléphonique public commuté.

16. Procédé selon la revendication 1, selon lequel les adresses du réseau comprennent des adresses de protocole Internet (IP).

17. Procédé selon la revendication 10, selon lequel au moins l'un du premier concentrateur de communication (301) et du second concentrateur de communication (307) comprend un commutateur.

18. Procédé selon la revendication 10, selon lequel au moins l'un du premier concentrateur de communication (301) et du second concentrateur de communication (305) comprend un concentrateur de communication résidentiel.
